# EUROPEAN PATENT SPECIFICATION

(11) **EP 4 507 232 B1**
(45) Date of publication and mention of the grant of the patent: **25.11.2026**
(21) Application number: 23794911.0
(22) Date of filing: 28.03.2023
(51) Int. Cl.: H04L 5/00, H04L 27/26

(54) **COMMUNICATION METHOD AND APPARATUS, AND DEVICE**
KOMMUNIKATIONSVERFAHREN UND -VORRICHTUNG SOWIE VORRICHTUNG
PROCÉDÉ, APPAREIL DE COMMUNICATION ET DISPOSITIF

(30) Priority: 29.04.2022 CN 202210476540
(43) Date of publication of application: 12.02.2025
(73) Proprietor: Huawei Technologies Co., Ltd., Shenzhen, Guangdong 518129 (CN)
(72) Inventor: RUAN, Liang, Shenzhen, Guangdong 518129 (CN); LIU, Kunpeng, Shenzhen, Guangdong 518129 (CN); GAO, Xiang, Shenzhen, Guangdong 518129 (CN); DONG, Changzhao, Shenzhen, Guangdong 518129 (CN)
(74) Representative: Goddar, Heinz J.
(86) International application number: PCT/CN2023/084299
(87) International publication number: WO 2023/207476

(56) References cited:
- WO-A1-2022/033555
- CN-A- 110 166 194
- CN-A- 110 890 946
- CN-A- 114 338 322
- CN-A- 114 884 634
- KR-A- 20190 013 636
- US-A1- 2021 184 808
- US-A1- 20250 119 320

## Description

### CROSS-REFERENCE TO RELATED APPLICATIONS

This application claims priority to Chinese Patent Application No. 202210476540.1, filed with the China National Intellectual Property Administration on April 29, 2022 and entitled "COMMUNICATION METHOD AND APPARATUS, AND DEVICE".

### TECHNICAL FIELD

This application relates to the field of communication technologies, and in particular, to a communication method and apparatus, and a device.

### BACKGROUND

A demodulation reference signal (demodulation reference signal, DMRS) may be used to estimate an equivalent channel matrix of a data channel (for example, a physical downlink shared channel (physical downlink shared channel, PDSCH)) or a control channel (for example, a physical downlink control channel (physical downlink control channel, PDCCH)), and therefore is used for data detection and demodulation.

Usually, one DMRS port (port) corresponds to one spatial layer, and each spatial layer corresponds to one transport stream. For multiple-input and multiple-output (multiple-input and multiple-output, MIMO) transmission whose quantity of transport streams is R, a quantity of needed DMRS ports is R. Currently, 5^{th} generation (5^{th}, 5G) new radio (new radio, NR) supports two DMRS resource mapping types: a configuration type 1 (Type 1) DMRS and a configuration type 2 (Type 2) DMRS. For a single-symbol DMRS configuration, the Type 1 DMRS can support a maximum of four orthogonal DMRS ports, and the Type 2 DMRS can support a maximum of six orthogonal DMRS ports. Therefore, for the single-symbol DMRS configuration, currently, the NR can support MIMO transmission of a maximum of only six streams.

As wireless communication devices are deployed more densely in the future, a quantity of terminal devices further increases. This imposes a higher requirement on the quantity of MIMO transport streams. In addition, with continuous evolution of a massive MIMO (Massive MIMO) system subsequently, a quantity of transmit/receive antennas also further increases (for example, a quantity of transmit antennas of a network device supports 128T or 256T, and a quantity of receive antennas of a terminal is 8R), and channel information is obtained more accurately, so that a larger quantity of transport streams can be further supported to improve spectral efficiency of the MIMO system. Therefore, more DMRS ports are needed to support the larger quantity of transport streams (more than the six streams for the single symbol).

WO 2022/033555 A1 discloses a signal transmission method. The method comprises: a sending device generates a sequence of a demodulation reference signal, and maps the sequence of the demodulation reference signal to a time-frequency resource of the demodulation reference signal for sending. The demodulation reference signal is used for estimating a channel state of a first channel, and the first channel is used for carrying uplink data. The time-frequency resource comprises frequency domain resources corresponding to a first CDM group that are discontinuous and are arranged at equal intervals; a first PRB in the frequency domain resources corresponding to the first CDM group comprises a first group of subcarriers and a second group of subcarriers; the first group of subcarriers and the second group of subcarriers each comprise two subcarriers; the first group of subcarriers correspond to a first group of OCCs; the second group of subcarriers correspond to a second group of OCCs; and the first group of OCCs and the second group of OCCs are orthogonal.

### SUMMARY

This application provides a communication method and apparatus, and a device, to support a larger quantity of transport streams.

According to a first aspect, an embodiment of this application provides a communication method according to claim 1.

When a resource (for example, the first resource and/or the second resource) used for transmission of the reference signal is on an edge sub-band, the sending device may send, in the first manner, the reference signal corresponding to the first port. In other words, for the edge sub-band, a quantity of ports may be increased in a TD-OCC manner. When a resource (for example, the third resource and/or the fourth resource) used for transmission of the reference signal is on a non-edge sub-band, the sending device may send, in the second manner, the reference signal corresponding to the first port. In other words, for the non-edge sub-band, a quantity of ports may be increased in an FD-OCC manner. According to the design, the DMRS channel estimation capabilities in the different scenarios can be adapted.

According to a second aspect, an embodiment of this application provides a communication method according to claim 4.

When a resource (for example, the first resource and/or the second resource) used for transmission of the reference signal is on an edge sub-band, the receiving device may receive the reference signal that corresponds to the first port and that is sent by the sending device in the first manner. In other words, for the edge sub-band, a quantity of ports may be increased in a TD-OCC manner. When a resource (for example, the third resource and/or the fourth resource) used for transmission of the reference signal is on a non-edge sub-band, the receiving device receives the reference signal that corresponds to the first port and that is sent by the sending device in the second manner. In other words, for the non-edge sub-band, a quantity of ports may be increased in an FD-OCC manner. According to the design, the DMRS channel estimation capabilities in the different scenarios can be adapted.

According to a third aspect, an embodiment of this application provides a communication apparatus, including a unit configured to perform steps in any one of the foregoing aspects.

According to a fourth aspect, an embodiment of this application further provides a computer-readable storage medium. The computer-readable storage medium stores a computer program. When the computer program is executed by a computer, the computer is enabled to perform the method provided in the first aspect or the second aspect.

For technical effects that can be achieved in any one of the third aspect to the fourth aspect, refer to descriptions of technical effects that can be achieved in any one of the possible designs in the first aspect or the second aspect. No repeated description is provided.

### BRIEF DESCRIPTION OF DRAWINGS

FIG. 1 is a diagram of an architecture of a communication system according to an embodiment of this application;
FIG. 2 is a diagram of a structure of a network device according to an embodiment of this application;
FIG. 3 is a diagram of a structure of another network device according to an embodiment of this application;
FIG. 4 is a diagram of a time-frequency resource mapping method of a Type 1 DMRS;
FIG. 5 is a diagram of a time-frequency resource mapping method of a Type 2 DMRS;
FIG. 6A is a diagram of a configuration pattern of an additional DMRS (additional DMRS);
FIG. 6B is a diagram of another configuration pattern of an additional DMRS;
FIG. 7 is a schematic flowchart of a communication method according to an embodiment of this application;
FIG. 8 is a diagram of a first time-frequency resource mapping method according to an embodiment of this application;
FIG. 9 is a diagram of a second time-frequency resource mapping method according to an embodiment of this application;
FIG. 10 is a diagram of a third time-frequency resource mapping method according to an embodiment of this application;
FIG. 11 is a diagram of a fourth time-frequency resource mapping method according to an embodiment of this application;
FIG. 12 is a diagram of a structure of a communication apparatus according to an embodiment of this application; and
FIG. 13 is a diagram of a structure of a communication device according to an embodiment of this application.

### DESCRIPTION OF EMBODIMENTS

This application provides a communication method and apparatus, and a device, to support a larger quantity of transport streams. The method, the apparatus, and the device are based on a same technical concept. Because problem-resolving principles are similar, for implementations of the apparatus, the device, and the method, refer to each other. No repeated description is provided.

According to a solution provided in embodiments of this application, after obtaining a reference signal corresponding to a first port, a sending device may send the reference signal by using a first resource and a second resource. The first port belongs to a first port set or a second port set, the first resource is on a first orthogonal frequency division multiplexing (orthogonal frequency division multiplexing, OFDM) symbol, the second resource is on a second OFDM symbol, and the first OFDM symbol is not adjacent to the second OFDM symbol. A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code. According to the solution, the sending device may transmit the reference signal by using resources on a plurality of non-adjacent OFDM symbols. In addition, the reference signal corresponding to the port in the first port set corresponds to the first cover code on the resources on the plurality of OFDM symbols, the reference signal corresponding to the port in the first port set corresponds to the second cover code on the resources on the plurality of OFDM symbols, and the first cover code is different from the second cover code. Therefore, a quantity of ports may be expanded by using the plurality of non-adjacent OFDM symbols, to support the larger quantity of transport streams.

The following describes some terms in embodiments of this application, to facilitate understanding of a person skilled in the art.
(1) A terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, customer premise equipment (customer premise equipment, CPE), a terminal agent, a terminal device, or the like.
   For example, the terminal device may be a handheld device with a wireless connection function, or may be a vehicle, a vehicle-mounted device (for example, a vehicle-mounted communication apparatus or a vehicle-mounted communication chip), or the like with a communication function. Currently, examples of some terminal devices are: a mobile phone (mobile phone), a cordless phone, a session initiation protocol (session initiation protocol, SIP) phone, a wireless local loop (wireless local loop, WLL) station, a personal digital processing (personal digital assistant, PDA) device, a handheld device with a wireless communication function, a computing device or another processing device connected to a wireless modem, a tablet computer, a computer with a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.
(2) A network device is a device that connects the terminal device to a wireless network in a mobile communication system. As a node in a radio access network, the network device may also be referred to as a base station, a radio access network (radio access network, RAN) node (or device), an access point (access point, AP), or an access network (access network, AN) device.
   Currently, examples of some network devices are: a next generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmission point (transmitting and receiving point, TRP), a transmitting point (transmitting point, TP), a mobile switching center, a home base station (for example, a home evolved NodeB or a home NodeB, HNB), a baseband unit (baseband unit, BBU), and the like.
(3) Spatial layer: For a spatial multiplexing MIMO system, transmission of a plurality of parallel data streams may be simultaneously performed on a same frequency domain resource, and each data stream is referred to as one spatial layer. The spatial layer in the MIMO may also be referred to as a transport layer, a data layer, a spatial stream, or the like.
(4) An edge sub-band is a sub-band whose quantity of included RBs is ${P}_{BWP , i}^{′} - {N}_{BWP , i}^{start} {modP}_{BWP}^{′}$ or $\left({N}_{BWP , i}^{start}+{N}_{BWP , i}^{size}\right) {modP}_{BWP , i}^{′}$ when $\left({N}_{BWP , i}^{start}+{N}_{BWP , i}^{size}\right) mod {P}_{BWP , i}^{′} \neq 0$. ${P}_{BWP . i}^{′}$ is bandwidth of a scheduled sub-band, that is, a quantity of RBs included in the scheduled sub-band, and is a value in {2 and 4}. ${N}_{BWP , i}^{start}$ is an identifier (identifier, ID) of a start scheduled RB, ${N}_{BWP , i}^{size}$ is a quantity of scheduled RBs, and mod represents a modulo operation.
(5) In this application, an OFDM symbol may also be referred to as a symbol.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. The character "/" usually indicates an "or" relationship between the associated objects. For example, A/B indicates A or B. "At least one of the following items (pieces)" or a similar expression thereof indicates any combination of these items (pieces), including a single item (piece) or any combination of a plurality of items (pieces).

In addition, it should be understood that, in the descriptions of this application, terms such as "first" and "second" are merely used for distinguishing and description, but should not be understood as indicating or implying relative importance, or should not be understood as indicating or implying a sequence.

A communication system to which embodiments of this application are applied is described below with reference to the accompanying drawings.

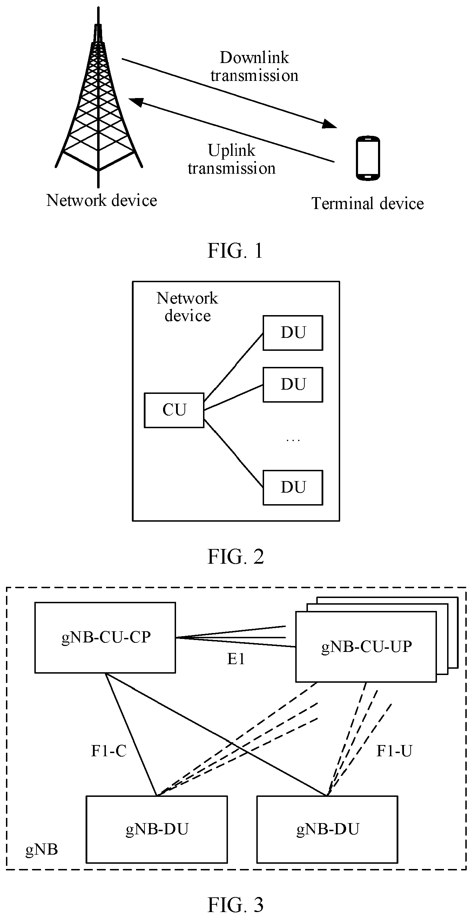

FIG. 1 shows a structure of a mobile communication system to which a method according to an embodiment of this application is applicable. Refer to FIG. 1. The system includes a network device and a terminal device. The network device is an entity that can receive and transmit a radio signal on a network side, is responsible for providing a service related to radio access for a terminal device in a coverage area of the network device, and implements a physical layer function and functions of resource scheduling and radio resource management, quality of service (Quality of Service, QoS) management, radio access control, and mobility management. The terminal device is an entity that can receive and transmit a radio signal on a user side, and needs to access a network via the network device. The terminal device may be any type of device that provides voice and/or data connectivity for a user.

The terminal device may have a plurality of transmit antennas and a plurality of receive antennas, have a multi-transmit capability and a multi-receive capability, and can transmit signals through a plurality of transmit channels and receive signals through a plurality of receive channels.

The network device may also have a plurality of transmit antennas and a plurality of receive antennas, and have a multi-transmit capability and a multi-receive capability. When the terminal device and the network device have the multi-transmit capability and the multi-receive capability, the system may also be referred to as a MIMO system.

For example, a structure of the network device in this embodiment of this application may be shown in FIG. 2. Specifically, the network device may be divided into a central unit (central unit, CU) node and at least one distributed unit (distributed unit, DU). The CU may be configured to manage or control the at least one DU. In other words, the CU is connected to the at least one DU. In this structure, protocol layers of the network device in the communication system may be split, where a part of the protocol layers is centrally controlled by the CU, functions of a part or all of remaining protocol layers are distributed in the DU, and the CU centrally controls the DU. For example, the network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) sublayer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in this embodiment of this application.

For example, the CU in this embodiment of this application may be further divided into one control plane (CU-control plane, CU-CP) network element and a plurality of user plane (CU-user plane, CU-UP) network elements. The CU-CP may be used for control plane management, and the CU-UP may be used for user plane data transmission. An interface between the CU-CP and the CU-UP may be an E1 interface. An interface between the CU-CP and the DU may be F1-C, and is used for control plane signaling transmission. An interface between the CU-UP and the DU may be F1-U, and is used for user plane data transmission. The CU-UP and the CU-UP may be connected through an Xn-U interface, to perform user plane data transmission. For example, the gNB is used as an example. A structure of the gNB may be shown in FIG. 3.

It should be further noted that the mobile communication system shown in FIG. 1 is used as an example, and does not constitute a limitation on a communication system to which the method provided in embodiments of this application is applicable. In conclusion, the method and the apparatus provided in embodiments of this application are applicable to various communication systems and application scenarios in which a terminal device supports a multi-transmit capability. In other words, embodiments of this application may be further applied to communication systems of various types and standards, for example, a 5G communication system, a long term evolution (Long Term Evolution, LTE) communication system, NR, wireless-fidelity (wireless-fidelity, Wi-Fi), world interoperability for microwave access (world interoperability for microwave access, WiMAX), vehicle to everything (vehicle to everything, V2X), long term evolutionvehicle (LTE-vehicle, LTE-V), vehicle to vehicle (vehicle to vehicle, V2V), internet of vehicles, machine type communication (Machine Type Communication, MTC), internet of things (internet of things, IoT), long term evolution-machine to machine (LTE-machine to machine, LTE-M), machine to machine (machine to machine, M2M), wireless communication related to the 3rd generation partnership project (3rd generation partnership project, 3GPP), or other wireless communication that may occur in the future. This is not limited in embodiments of this application.

Currently, a DMRS may be used to estimate an equivalent channel that is passed through and that is of a data channel (for example, a PDSCH) or a control channel (for example, a PDCCH), or used to estimate a matrix of an equivalent channel that is passed through and that is of a data channel (for example, a PDSCH) or a control channel (for example, a PDCCH), so as to be used for data detection and demodulation. A channel may perform specific weighting or a change (for example, an amplitude change, a phase change, or a frequency change) on a signal that passes through the channel. The channel may also be referred to as a channel response, and the channel response may be represented by a channel response coefficient.

It is assumed that a vector of a DMRS sent by a transmit end is s, a vector of sent data (or referred to as a data symbol) is x, a same precoding operation is performed on the DMRS and the data (multiplied by a same precoding matrix P), and the DMRS and the data pass through a same channel. In this way, after receiving a received signal corresponding to the data vector and a received signal corresponding to the DMRS vector, a receive end may obtain estimation of an equivalent channel based on the known DMRS vector s by using a channel estimation algorithm. Then, the receive end may complete MIMO equalization and demodulation based on the equivalent channel.

The DMRS is used to estimate the equivalent channel, and a dimension of the equivalent channel is N_{R} × R. N_{R} is a quantity of receive antennas, and R is a quantity of transport streams (rank, that is, a quantity of data streams or a quantity of spatial layers). Usually, one DMRS port (which may be referred to as a port for short in this application) corresponds to one spatial layer. Therefore, for MIMO transmission whose quantity of transport streams is R, a quantity of needed DMRS ports is R.

To ensure channel estimation quality, different DMRS ports are usually orthogonal ports, to avoid interference between the different DMRS ports. That different DMRS ports are orthogonal ports means that DMRSs corresponding to the different DMRS ports are orthogonal in frequency domain, time-frequency domain, or code domain. For one DMRS port, to perform channel estimation on different time-frequency resources and ensure the channel estimation quality, a plurality of DMRSs need to be sent on a plurality of time-frequency resources. The DMRS may occupy at least one OFDM symbol in time domain, and bandwidth occupied in frequency domain is the same as scheduled bandwidth of a scheduled data signal. A plurality of DMRS symbols corresponding to one port correspond to one reference signal sequence, and the reference signal sequence includes a plurality of reference signal sequence elements.

A DMRS sequence corresponding to one port may be multiplied by a corresponding cover code sequence according to a preset time-frequency resource mapping rule, and then mapped to a corresponding time-frequency resource.

For a port p, an m^{th} reference sequence element r(m) in a DMRS sequence corresponding to the port p may be mapped, according to the following rule, to a resource element (resource element, RE) whose index is (*k, l*)*_{p,µ}*. The RE whose index is (*k,* l*)_{p,µ}* may correspond to an OFDM symbol whose index is *l* in one slot in time domain, and correspond to a subcarrier whose index is *k* in frequency domain, and the mapping rule satisfies: ${a}_{k . l}^{\left(p, μ\right)} = {β}_{PDSCH}^{DMRS} {w}_{f} \left(k′\right) {w}_{t} \left(l′\right) r \left(2n+k′\right)$ (1) $k = \left\{\begin{matrix}4 n + 2 k ′ + Δ & Type 1 \\ 6 n + k ′ + Δ & Type 2\end{matrix}\right. ;$
*k*' = 0, 1;
*l = l̅ + l'*;
*n =* 0, 1, ...;
*l'* = 0, 1.

*p* is an index of the DMRS port, *µ* is a subcarrier spacing parameter, ${a}_{k . l}^{\left(p, μ\right)}$ is a DMRS modulation symbol corresponding to the port *p* mapped to the RE whose index is (*k, l*)*_{p,µ},* ${β}_{PDSCH}^{DMRS}$ is a power scaling factor, *w*ₜ (*l'*) is a time domain cover code element corresponding to an OFDM symbol whose index is *l*', *w*_{f}(*k*') is a frequency domain cover code element corresponding to a subcarrier whose index is *k', m* = 2*n + k',* Δ is a subcarrier offset factor, and *l̅* is a symbol index of a start OFDM symbol occupied by the DMRS modulation symbol or a symbol index of a reference OFDM symbol. A value of m is related to a configuration type.

The following separately describes resource mapping of a Type 1 DMRS and a Type 2 DMRS.

### For the Type 1 DMRS:

In a Type 1 DMRS mapping rule, values of *w*_{f}(*k*')*, w*ₜ(*l*')*,* and Δ corresponding to the DMRS port *p* may be determined according to Table 1.

**Table 1: Type 1 DMRS parameter values**

| ***p*** | *λ* | **Δ** | *w*_{f}(*k*') | | *w*ₜ(*l*') | |
|---|---|---|---|---|---|---|
| | | | *k'* = 0 | *k'* = 1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

*λ* is an index of a code division multiplexing (code division multiplexing, CDM) group (which may also be referred to as an orthogonal multiplexing group) to which the port *p* belongs, and DMRS ports in a same orthogonal multiplexing group occupy a same time-frequency resource.

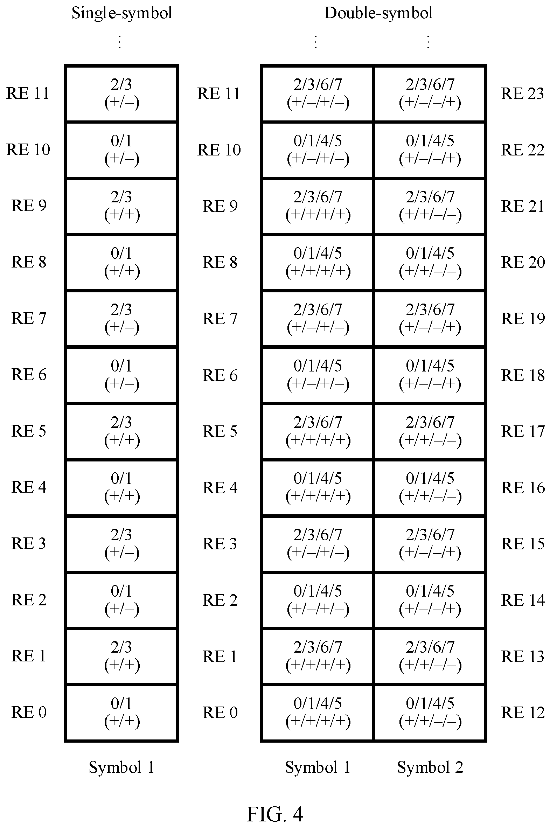

According to the formula (1), a time-frequency resource mapping manner of the Type 1 DMRS is shown in FIG. 4.

A single-symbol DMRS (corresponding to *l*'=0) supports a maximum of four ports, and a DMRS resource occupies one OFDM symbol. The four DMRS ports are grouped into two code division multiplexing groups, where a CDM group 0 includes a port 0 and a port 1, and a CDM group 1 includes a port 2 and a port 3. Frequency division multiplexing is performed between the CDM group 0 and the CDM group 1 (that is, mapped to different frequency domain resources). DMRS ports included in a CDM group are mapped to a same time-frequency resource. Reference signal sequences corresponding to the DMRS ports included in the CDM group are distinguished by using cover code sequences, to ensure orthogonality of the DMRS ports in the CDM group, and further suppress interference between DMRSs whose transmission is performed on different antenna ports.

Specifically, the port 0 and the port 1 are in a same RE, and resource mapping is performed in a comb manner in frequency domain. In other words, adjacent frequency domain resources occupied by the port 0 and the port 1 are separated by one subcarrier. For one DMRS port, two adjacent occupied REs correspond to one cover code sequence whose length is 2. For example, for a subcarrier 0 and a subcarrier 2, a group of cover code sequences (+1+1 and +1-1) whose lengths are 2 are used for the port 0 and the port 1. Similarly, the port 2 and the port 3 are in a same RE, and are mapped, in a comb manner in frequency domain, to REs that are not occupied by the port 0 and the port 1. For a subcarrier 1 and a subcarrier 3, a group of cover code sequences (+1+1 and +1-1) whose lengths are 2 are used for the port 2 and the port 3.

It should be understood that *p* in the table of this application is the port index, a port whose port index is 1000 may be the port 0, a port whose port index is 1001 may be the port 1, ..., and a port whose port index is 100X may be a port X.

A double-symbol DMRS (corresponding to *l*'=0 or 1) supports a maximum of eight ports, and a DMRS resource occupies two OFDM symbols. The eight DMRS ports are grouped into two CDM groups, where a CDM group 0 includes a port 0, a port 1, a port 4, and a port 5, and a CDM group 1 includes a port 2, a port 3, a port 6, and a port 7. Frequency division multiplexing is performed between the CDM group 0 and the CDM group 1. DMRS ports included in a CDM group are mapped to a same time-frequency resource. Reference signal sequences corresponding to the DMRS ports included in the CDM group are distinguished by using cover code sequences.

Specifically, the port 0, the port 1, the port 4, and the port 5 are in a same RE, and resource mapping is performed in a comb manner in frequency domain. In other words, adjacent frequency domain resources occupied by the port 0, the port 1, the port 4, and the port 5 are separated by one subcarrier. For one DMRS port, two adjacent occupied subcarriers and two OFDM symbols correspond to one cover code sequence whose length is 4. For example, for a subcarrier 0 and a subcarrier 2 corresponding to an OFDM symbol 1 and an OFDM symbol 2, a group of cover code sequences (+1+1+1+1/+1+1-1-1/+1-1+1-1/+1-1-1+1) whose lengths are 4 are used for the port 0, the port 1, the port 4, and the port 5. Similarly, the port 2, the port 3, the port 6, and the port 7 are in a same RE, and are mapped, in a comb manner in frequency domain, to subcarriers that are not occupied by the port 0, the port 1, the port 4, and the port 5. For a subcarrier 1 and a subcarrier 3 corresponding to the OFDM symbol 1 and the OFDM symbol 2, a group of cover code sequences (+1+1+1+1/+1+1-1-1/+1-1+1-1/+1-1-1+1) whose lengths are 4 are used for the port 2, the port 3, the port 6, and the port 7.

### For the Type 2 DMRS:

In a Type 2 DMRS mapping rule, values of *w_{f}*(*k*'), *w*ₜ(*l*')*,* and Δ corresponding to the DMRS port *p* may be determined according to Table 2.

**Table 2: Type 2 DMRS port parameter values**

| ***p*** | *λ* | **Δ** | *w*_{f}(*k'*) | | *w*ₜ(*l*') | |
|---|---|---|---|---|---|---|
| | | | *k'* = 0 | *k'* = 1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

*λ* is an index of a CDM group (which may also be referred to as an orthogonal multiplexing group) to which the port *p* belongs, and DMRS ports in a same CDM group occupy a same time-frequency resource.

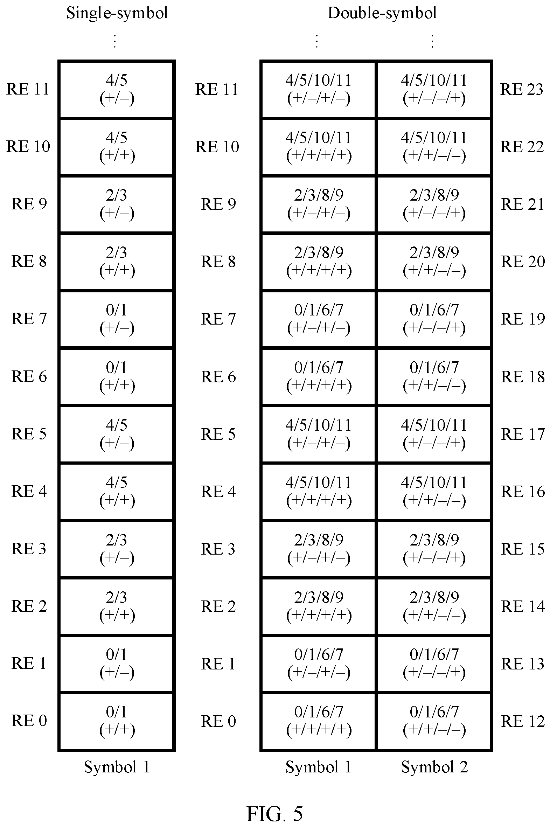

According to the formula (1), a time-frequency resource mapping manner of the Type 2 DMRS is shown in FIG. 5.

A single-symbol DMRS supports a maximum of six ports, and a DMRS resource occupies one OFDM symbol. The six DMRS ports are grouped into three CDM groups, where a CDM group 0 includes a port 0 and a port 1, a CDM group 1 includes a port 2 and a port 3, and a CDM group 2 includes a port 4 and a port 5. Frequency division multiplexing is performed between CDM groups, and DMRSs corresponding to DMRS ports included in the CDM group are mapped to a same time-frequency resource. Reference signal sequences corresponding to the DMRS ports included in the CDM group are distinguished by using cover code sequences. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain.

Specifically, the port 0 and the port 1 are in a same RE, and resource mapping is performed in a comb manner in frequency domain. For example, a frequency domain resource granularity is one RB, and the port 0 and the port 1 occupy a subcarrier 0, a subcarrier 1, a subcarrier 6, and a subcarrier 7. The port 2 and the port 3 occupy a subcarrier 2, a subcarrier 3, a subcarrier 8, and a subcarrier 9. The port 4 and the port 5 occupy a subcarrier 4, a subcarrier 5, a subcarrier 10, and a subcarrier 11. Two DMRS ports included in one CDM group correspond, in two adjacent subcarriers, to cover code sequences (+1+1 and +1-1) whose lengths are 2.

A double-symbol DMRS supports a maximum of twelve ports, and a DMRS resource occupies two OFDM symbols. The twelve DMRS ports are grouped into three CDM groups, where a CDM group 0 includes a port 0, a port 1, a port 6, and a port 7, a CDM group 1 includes a port 2, a port 3, a port 8, and a port 9, and a CDM group 2 includes a port 4, a port 5, a port 10, and a port 11. Frequency division multiplexing is performed between CDM groups, and DMRSs corresponding to DMRS ports included in the CDM group are mapped to a same time-frequency resource. Reference signal sequences corresponding to the DMRS ports included in the CDM group are distinguished by using cover code sequences. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain.

Specifically, the port 0, the port 1, the port 6, and the port 7 are in a same RE, and resource mapping is performed in a comb manner in frequency domain. For example, a frequency domain resource granularity is one RB, and the port 0, the port 1, the port 6, and the port 7 occupy a subcarrier 0, a subcarrier 1, a subcarrier 6, and a subcarrier 7 that correspond to an OFDM symbol 1 and an OFDM symbol 2. The port 2, the port 3, the port 8, and the port 9 occupy a subcarrier 2, a subcarrier 3, a subcarrier 8, and a subcarrier 9 that correspond to the OFDM symbol 1 and the OFDM symbol 2. The port 4, the port 5, the port 10, and the port 11 occupy a subcarrier 4, a subcarrier 5, a subcarrier 10, and a subcarrier 11 that correspond to the OFDM symbol 1 and the OFDM symbol 2. Four DMRS ports included in one CDM group correspond, in two adjacent subcarriers corresponding to two OFDM symbols, to cover code sequences (+1+1+1+1/+1+1-1-1/+1-1+1-1/+1-1-1+1) whose lengths are 4.

It should be understood that *p* in the table of this application is the port index, a port whose port index is 1000 may be the port 0, a port whose port index is 1001 may be the port 1, ..., and a port whose port index is 100X may be a port X.

As described above, currently, the single-symbol DMRS in NR can support the maximum of six DMRS ports, so that MIMO transmission of a maximum of six streams can be supported. However, as wireless communication devices are deployed more densely in the future, a quantity of terminal devices further increases. This imposes a higher requirement on a quantity of MIMO transport streams. In addition, with continuous evolution of a massive MIMO system subsequently, a quantity of transmit/receive antennas further increases (for example, a quantity of transmit antennas of a network device supports 128T or 256T, and a quantity of receive antennas of a terminal is 8R), and channel information is obtained more accurately, so that a larger quantity of transport streams can be further supported to improve spectral efficiency of the MIMO system. Therefore, more DMRS ports are needed to support the larger quantity of transport streams (more than the six streams).

Different DMRS ports depend on frequency division multiplexing, time division multiplexing, or code division multiplexing to implement orthogonality, but time-frequency resources and orthogonal codeword sets are limited.

A possible method for expanding an existing quantity of orthogonal DMRS ports is to increase a time-frequency resource occupied by a DMRS. According to the method, it can be ensured that a quantity of resources occupied by a DMRS symbol corresponding to each DMRS port remains unchanged. However, as a quantity of ports increases, a quantity of resources needed by the DMRS port also increases, and more time-frequency resources need to be occupied. This increases DMRS overheads. In addition, the increase in the DMRS overheads reduces the spectral efficiency of the system.

In another possible method, DMRS symbols corresponding to more non-orthogonal DMRS ports are multiplexed while a same time-frequency resource (overhead) is ensured. For example, a DMRS sequence with a low cross-correlation corresponding to a newly added DMRS is designed. A low cross-correlation is ensured between a sequence corresponding to a newly added DMRS port and a sequence corresponding to an existing DMRS port. However, superposition of the non-orthogonal ports inevitably causes specific interference, resulting in a loss of system performance (for example, a channel estimation capability).

Therefore, how to introduce the new DMRS port is a problem that needs to be resolved.

For ease of understanding this application, the following describes an additional DMRS (additional DMRS).

Considering a channel change between different time domain symbols, an additional DMRS configuration type is introduced in an NR standard, to track the channel change and reduce impact of a residual frequency offset and phase noise on the channel estimation capability. For ease of distinguishing from the additional DMRS, the DMRS configurations shown in FIG. 4 and FIG. 5 may be referred to as front-loaded DMRS (front-loaded DMRS) configurations.

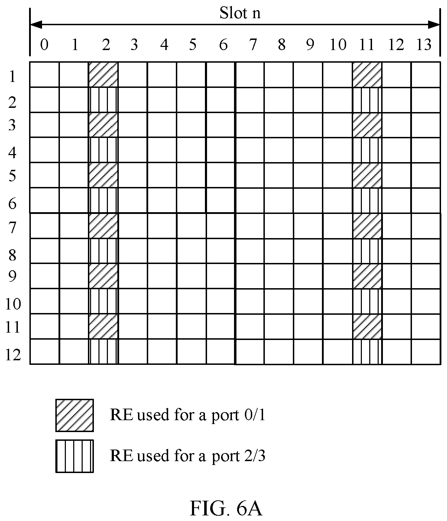

FIG. 6A shows a configuration pattern of an additional DMRS. The additional DMRS corresponds to the Type 1 DMRS shown in a left figure of FIG. 4. In FIG. 6A, a plurality of symbols used for transmission of DMRSs may be configured in a same slot, and a DMRS pattern (DMRS pattern) on each symbol is the same as the DMRS pattern shown in the left figure of FIG. 4. The DMRS pattern shown in the left figure of FIG. 4 may be a special case in which the pattern shown in FIG. 6A includes only a symbol 2 (which may also be referred to as the 2^{nd} symbol).

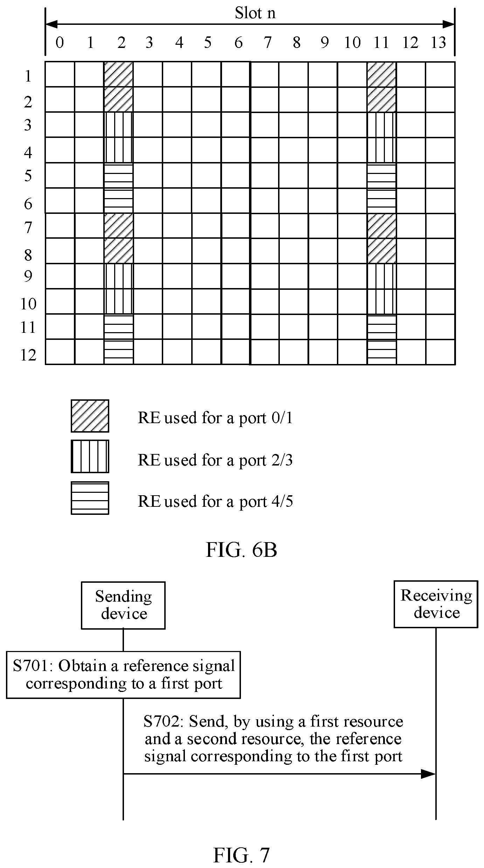

FIG. 6B shows another configuration pattern of an additional DMRS. The additional DMRS corresponds to the Type 2 DMRS shown in a left figure of FIG. 5. In FIG. 6B, a plurality of symbols used for transmission of DMRSs may be configured in a same slot, and a DMRS pattern (DMRS pattern) on each symbol is the same as the DMRS pattern shown in the left figure of FIG. 5. The DMRS pattern shown in the left figure of FIG. 5 may be a special case in which the pattern shown in FIG. 6B includes only a symbol 2 (which may also be referred to as the 2^{nd} symbol).

In FIG. 6A and FIG. 6B, only an example in which the additional DMRS corresponds to the single-symbol DMRS is used for description. It should be understood that the additional DMRS may alternatively correspond to the double-symbol DMRS in FIG. 4 or FIG. 5. For example, in the DMRS pattern of the additional DMRS, patterns of a symbol 2 and a symbol 3 are the same as the DMRS pattern of the double-symbol DMRS in FIG. 4, and patterns of a symbol 10 and a symbol 11 are also the same as the DMRS pattern of the double-symbol DMRS in FIG. 4. For another example, in the DMRS pattern of the additional DMRS, patterns of a symbol 2 and a symbol 3 are the same as the DMRS pattern of the double-symbol DMRS in FIG. 5, and patterns of a symbol 10 and a symbol 11 are also the same as the DMRS pattern of the double-symbol DMRS in FIG. 5.

For the additional DMRS configuration type, a DMRS sequence corresponding to one port may be multiplied by a corresponding cover code sequence according to a preset time-frequency resource mapping rule, and then mapped to a corresponding time-frequency resource.

For a port p, an m^{th} reference sequence element r(m) in a DMRS sequence corresponding to the port p may be mapped, according to the following rule, to a resource element (resource element, RE) whose index is (*k, l*)*_{p,µ}*. The RE whose index is (*k, l*)*_{p,µ}* may correspond to an OFDM symbol whose index is *l* in one slot in time domain, and correspond to a subcarrier whose index is *k* in frequency domain, and the mapping rule satisfies: ${a}_{k , l}^{\left(p, μ\right)} = {β}_{PDSCH}^{DMRS} {w}_{f} \left(k′\right) {w}_{t} \left(l′\right) r \left(2n+k′\right)$ $k = \left\{\begin{matrix}4 n + 2 k ′ + Δ & Type 1 \\ 6 n + k ′ + Δ & Type 2\end{matrix}\right.$
*k'* =0, 1
*l = l̅* +*l'*
*n = 0,* 1, ...

For a meaning of each parameter, refer to the descriptions of formula (1).

For the single-symbol DMRS, a value of *l̅* may be shown in Table 3. For the double-symbol DMRS, a value of *l̅* may be shown in Table 4.

**Table 3**

| l_{d} | DMRS position *l̅* | | | | | | | |
|---|---|---|---|---|---|---|---|---|
| | PDSCH mapping type A (PDSCH mapping type A) | | | | PDSCH mapping type B (PDSCH mapping type B) | | | |
| | Additional DMRS position (dmrs-AdditionalPosition) | | | | dmrs-AdditionalPosition | | | |
| | Position (pos) 0 | Pos 1 | Pos 2 | Pos 3 | Pos 0 | Pos 1 | Pos 2 | Pos 3 |
| 2 | - | - | - | - | *l*₀ | *l*₀ | *l*₀ | *l*₀ |
| 3 | *l*₀ | *l*₀ | *l*₀ | *l*₀ | *l*₀- | *l*₀- | *l*₀ | *l*₀ |
| 4 | *l*₀ | *l*₀ | *l*₀ | *l*₀ | *l*₀ | *l*₀ | *l*₀ | *l*₀ |
| 5 | *l*₀ | *l*₀ | *l*₀ | *l*₀ | *l*₀- | *l*₀, 4- | *l*₀, 4 | *l*₀, 4 |
| 6 | *l*₀ | *l*₀ | *l*₀ | *l*₀ | *l*₀ | *l*₀, 4 | *l*₀, 4 | *l*₀, 4 |
| 7 | *l*₀ | *l*₀ | *l*₀ | *l*₀ | *l*₀ | *l*₀, 4 | *l*₀, 4 | *l*₀, 4 |
| 8 | *l*₀ | *l*₀ , 7 | *l*₀ , 7 | *l*₀ , 7 | *l*₀- | *l*₀, 6- | *l*₀, 3, 6 | *l*₀, 3, 6 |
| 9 | *l*₀ | *l*₀ , 7 | *l*₀ , 7 | *l*₀ , 7 | *l*₀*-* | *l*₀, 7- | *l*₀, 4,7 | *l*₀, 4,7 |
| 10 | *l*₀ | *l*₀ , 9 | *l*₀ , 6, 9 | *l*₀ , 6, 9 | *l*₀- | *l*₀, 7- | *l*₀, 4, 7 | *l*₀, 4,7 |
| 11 | *l*₀ | *l*₀ , 9 | *l*₀ , 6, 9 | *l*₀ , 6, 9 | *l*₀- | *l*₀, 8- | *l*₀, 4, 8 | *l*₀, 3, 6, 9 |
| 12 | *l*₀ | *l*₀ , 9 | *l*₀ , 6, 9 | *l*₀, 5, 8, 11 | *l*₀- | *l*₀, 9- | *l*₀, 5, 9 | *l*₀, 3, 6, 9 |
| 13 | *l*₀ | *l*₀ *, l*₁ | *l*₀ , 7, 11 | *l*₀ , 5, 8, 11 | *l*₀- | *l*₀, 9- | *l*₀, 5, 9 | *l*₀, 3, 6, 9 |
| 14 | *l*₀ | *l*₀ *, l*₁ | *l*₀ , 7, 11 | *l*₀ , 5, 8, 11 | - | - | - | - |

**Table 4**

| l_{d} | DMRS position *l̅* | | | | | |
|---|---|---|---|---|---|---|
| | PDSCH mapping type A | | | PDSCH mapping type B | | |
| | dmrs-AdditionalPosition | | | dmrs-AdditionalPosition | | |
| | Pos 0 | Pos 1 | Pos 2 | Pos 0 | Pos 1 | Pos 2 |
| <4 | | | | - | - | |
| 4 | *l*₀ | *l*₀ | | - | - | |
| 5 | *l*₀ | *l*₀ | | *l*₀- | *l*₀- | |
| 6 | *l*₀ | *l*₀ | | *l*₀ | *l*₀ | |
| 7 | *l*₀ | *l*₀ | | *l*₀ | *l*₀ | |
| 8 | *l*₀ | *l*₀ | | *l*₀- | *l*₀, 5- | |
| 9 | *l*₀ | *l*₀ | | *l*₀- | *l*₀, 5- | |
| 10 | *l*₀ | *l*₀ , 8 | | *l*₀- | *l*₀, 7- | |
| 11 | *l*₀ | *l*₀ , 8 | | *l*₀- | *l*₀, *7-* | |
| 12 | *l*₀ | *l*₀ , 8 | | *l*₀- | *l*₀, 8- | |
| 13 | *l*₀ | *l*₀ , 10 | | *l*₀- | *l*₀, 8- | |
| 14 | *l*₀ | *l*₀ , 10 | | - | - | |

l_{d} is a quantity of continuous symbols of a PDSCH; and *l*₀ is a front-loaded DMRS position, which may also be referred to as a position of a start OFDM symbol occupied by a DMRS in a front-loaded DMRS configuration. For the pos 0, the pos 1, and the pos 2, a value of *l*₀ is 2; and for the pos 3, a value of *l*₀ is 3. The pos 0 indicates that one symbol may be used for transmission of the DMRS, the pos 1 indicates that two symbols may be used for transmission of the DMRS, the pos 2 indicates that three symbols may be used for transmission of the DMRS, and the pos 3 indicates that four symbols may be used for transmission of the DMRS. For example, in Table 3, when l_{d} is 10, for the pos 1 in the PDSCH mapping type A, values of *l̅* may be *l*₀ and *l*₀+9. That is, the transmission of the DMRS may be performed on the symbol *l*₀ and the symbol *l*₀+9.

In this application, a symbol occupied by the DMRS in the front-loaded DMRS configuration is a front-loaded DMRS symbol (namely, a front-loaded symbol), and a symbol used for transmission of the DMRS in the additional DMRS configuration pattern other than the front-loaded DMRS symbol is an additional DMRS symbol.

Currently, the additional DMRS is not used to increase a quantity of DMRS ports, and a channel estimation capability in a high-speed movement case (for example, a speed of a terminal device is greater than a specified speed threshold) is ensured by repeated transmission of DMRSs only by using different OFDM symbols.

The following describes the solutions provided in this application with reference to the accompanying drawings.

An embodiment of this application provides a communication method. The method is applied to the communication system shown in FIG. 1, and is performed by a network device or a terminal device. The following specifically describes a procedure of the method with reference to a flowchart shown in FIG. 7. A sending device may be the terminal device, and a receiving device may be the network device. A reference signal includes but is not limited to a DMRS. In the following descriptions, an example in which the reference signal is the DMRS is mainly used for description. The DMRS may be replaced with another type of reference signal based on an actual requirement.

As shown in FIG. 7, the communication method provided in this embodiment of this application may include the following steps.

S701: The sending device obtains a reference signal corresponding to a first port.

The first port belongs to a first port set or a second port set. Ports in the first port set may be existing ports, for example, the port 0 and the port 1 in FIG. 4. Ports in the second port set may be newly added ports.

Optionally, the first port set and the second port set are different CDM groups. For example, for a single-symbol Type 1 DMRS, the first port set may be a CDM group 0 or a CDM group 1; and for a single-symbol Type 2 DMRS, the first port set may be a CDM group 0, a CDM group 1, or a CDM group 2. The second port set may be a CDM group 3, a CDM group 4, or a CDM group 5. For the single-symbol Type 1 DMRS, the CDM group 3 may include a port 8 and a port 9, and the CDM group 4 may include a port 10 and a port 11. For the single-symbol Type 2 DMRS, the CDM group 3 may include a port 12 and a port 13, the CDM group 4 may include a port 14 and a port 15, and the CDM group 5 may include a port 16 and a port 17.

S702: The sending device sends, by using a first resource and a second resource, the reference signal corresponding to the first port. Correspondingly, the receiving device receives, by using the first resource and the second resource, the reference signal corresponding to the first port.

The first resource may be on a first OFDM symbol, the second resource may be on a second OFDM symbol, and the first OFDM symbol is not adjacent to the second OFDM symbol. In other words, the first resource and the second resource are not adjacent in time domain. For example, the first resource and the second resource are respectively on a symbol 2 and a symbol 11 in a same slot. The first resource is an RE 1 and an RE 3 in the symbol 2, and the second resource is an RE 1 and an RE 3 in the symbol 11.

In addition, a reference signal corresponding to the port in the first port set may correspond to a first cover code on the first resource and the second resource, a reference signal corresponding to the port in the second port set may correspond to a second cover code on the first resource and the second resource, and the first cover code is different from the second cover code. In other words, the port in the first port set may be multiplexed with the port in the second port set on a same time-frequency resource in a time division orthogonal cover code (time division orthogonal cover code, TD-OCC) manner. For specific content, refer to any one of the following manner A1, manner B1, manner C1, and manner D1. Details are not described herein.

According to the method, the sending device may transmit the reference signal by using resources on a plurality of non-adjacent OFDM symbols. In addition, the reference signal corresponding to the port in the first port set corresponds to the first cover code on the resources on the plurality of OFDM symbols, the reference signal corresponding to the port in the first port set corresponds to the second cover code on the resources on the plurality of OFDM symbols, and the first cover code is different from the second cover code. Therefore, a quantity of ports may be expanded by using the plurality of non-adjacent OFDM symbols, to support a larger quantity of transport streams.

Optionally, in a possible implementation, the first OFDM symbol is a front-loaded DMRS symbol, and the second OFDM symbol is an additional DMRS symbol. For specific content of the front-loaded DMRS symbol and the additional DMRS symbol, refer to the following case 1 to case 4. Details are not described herein.

In the method, the quantity of DMRS ports is increased by using an existing additional DMRS symbol, so that the quantity of DMRS ports can be increased when an additional resource is occupied, to support the larger quantity of transport streams. In addition, according to the method, an existing DMRS port configuration is slightly changed, and a loss of channel estimation performance is not caused.

In addition, because the port in the first port set may be multiplexed, on the same time-frequency resource in the TD-OCC manner, with the port in the second port set that is newly added due to the additional DMRS symbol, for an additional DMRS, more multiplexing manners may be flexibly supported by using a port configuration. For example, repeated transmission of the DMRS is performed, or DMRSs of ports are distinguished in the TD-OCC manner.

Optionally, in a possible implementation, when the sending device is the terminal device, before S702, the method further includes:
O1: The network device sends first indication information to the terminal device. Correspondingly, the terminal device receives the first indication information from the network device.

The first indication information may indicate to send, in a first manner, the reference signal corresponding to the first port. The first manner is sending the reference signal of the first port by using the first resource and the second resource, that is, sending the reference signal of the first port in the manner of S702.

Optionally, the first indication information may be sent by using a message (for example, an RRC message), or may be carried in control information (for example, downlink control information (downlink control information, DCI)).

In addition, the first indication information may directly indicate to send, in the first manner, the reference signal corresponding to the first port. For example, when the first indication information is a first value, the first indication information may indicate to send, in the first manner, the reference signal corresponding to the first port. Alternatively, the first indication information may indirectly indicate to send, in the first manner, the reference signal corresponding to the first port. For example, the first indication information includes a first port index, and the first port index indicates the first manner. For example, when a reference signal of a port H is dedicated to transmission in the first manner, a port index of the port H may be the first port index, where H is a nonnegative integer.

Optionally, when at least one of the following conditions is met, the network device may determine that the reference signal of the first port needs to be sent in the first manner, and send the first indication information to the terminal device.

Condition 1: A moving speed of the terminal device is less than a first speed threshold. For example, the network device may obtain timing advances (time advances, TAs) and angles of arrival (angles of arrival, AoAs) of the terminal device at a moment 1 and a moment 2. The network device may determine, by using the TAs of the terminal device, a distance of the terminal device relative to the AN device, and the network device may determine, by using the AoAs, a direction of the terminal device relative to the AN device. Therefore, the network device may determine a position 1 of the terminal device at the moment 1 and a position 2 of the terminal device at the moment 2. Then, the network device may determine that the moving speed of the terminal device is (position 2-position 1)/(moment 2-moment 1). Then, the network device may determine whether the condition 1 is met.

Condition 2: A channel quality change of the terminal device is less than a first channel quality threshold. For example, the network device may estimate a channel of the terminal device, to determine channel quality 1 of the terminal device at a moment 3 and channel quality 2 of the terminal device at a moment 4. When a difference between the channel quality 2 and the channel quality 1 is less than the first channel quality threshold, the network device may determine whether the condition 2 is met.

Condition 3: A resource used for transmission of the DMRS is on an edge sub-band. For example, the network device may determine, based on an explanation of the edge sub-band, whether the condition 3 is met.

Condition 4: A total quantity of ports needed by the terminal device is greater than a quantity of ports that can be currently supported by NR. For example, for the Type 1 DMRS, when a quantity of data streams that need to be transmitted by the terminal device exceeds 8, the total quantity of needed ports is also greater than 8, and therefore exceeds the quantity of ports that can be currently supported by the NR, and the condition 4 is met. For another example, for the Type 2 DMRS, when a quantity of data streams that need to be transmitted by the terminal device exceeds 12, the total quantity of needed ports is also greater than 12, and therefore exceeds the quantity of ports that can be currently supported by the NR, and the condition 4 is met.

According to the method, the terminal device may transmit, in the first manner as indicated by the network device, the reference signal corresponding to the first port. In this way, the network device may flexibly configure a manner in which the terminal device sends the reference signal (which may also be referred to as a DMRS port multiplexing manner), to adapt to DMRS channel estimation capabilities in different scenarios.

Optionally, in a possible implementation, when the sending device is the terminal device, the method further includes step P1 and step P2.

P1: The network device sends second indication information to the terminal device. Correspondingly, the terminal device receives the second indication information from the network device. The second indication information may indicate the terminal device to send, in a second manner, the reference signal corresponding to the first port.

The second manner is that the terminal device sends the reference signal of the first port by using a third resource and a fourth resource. The third resource and the fourth resource are on different frequency domain resources. For example, the third resource is the RE 1 and the RE 3 in the symbol 2, and the fourth resource is an RE 5 and an RE 7 in the symbol 2.

In addition, the reference signal corresponding to the port in the first port set may correspond to a third cover code on the third resource and the fourth resource, the reference signal corresponding to the port in the second port set corresponds to a fourth cover code on the third resource and the fourth resource, and the third cover code is different from the fourth cover code. For specific content, refer to the following manner A2. Details are not described herein.

Optionally, the second indication information may be sent by using a message (for example, an RRC message), or may be carried in control information (for example, DCI). The second indication information may directly indicate to send, in the second manner, the reference signal corresponding to the first port. For example, when the second indication information is a second value, the second indication information may indicate to send, in the second manner, the reference signal corresponding to the first port. Alternatively, the second indication information may indirectly indicate to send, in the second manner, the reference signal corresponding to the first port. For example, the second indication information includes a second port index, and the second port index indicates the second manner. For example, when a reference signal of a port I is dedicated to transmission in the second manner, a port index of the port I may be the second port index, where I is a nonnegative integer.

Optionally, when at least one of the following conditions is met, the network device may determine that the reference signal of the first port needs to be sent in the second manner, and send the second indication information to the terminal device.

Condition I: A moving speed of the terminal device is greater than a second speed threshold. For example, the network device may obtain the moving speed of the terminal device in a manner similar to that of the condition 1, to determine whether the condition I is met.

Condition II: Channel delay spread of the terminal device is less than a delay spread threshold. For example, the network device may obtain the channel delay spread of the terminal device through channel estimation, to determine whether the condition II is met.

Condition III: A resource used for transmission of the DMRS is on a non-edge sub-band. For example, the network device may determine, based on an explanation of the edge sub-band, whether the condition III is met.

Condition IV: A total quantity of ports needed by the terminal device is greater than a quantity of ports that can be currently supported by NR. For specific content, refer to the condition 4. Details are not described herein again.

P2: The terminal device sends, by using the third resource and the fourth resource, the reference signal corresponding to the first port. Correspondingly, the network device receives, by using the third resource and the fourth resource, the reference signal corresponding to the first port.

According to the method, the terminal device may transmit, in the second manner as indicated by the network device, the reference signal corresponding to the first port. In this way, the network device may flexibly configure a manner in which the terminal device sends the reference signal, to adapt to DMRS channel estimation capabilities in different scenarios.

Optionally, in a possible implementation, when the sending device is the terminal device, the method further includes step Q1 and step Q2.

Q1: The network device sends third indication information to the terminal device. Correspondingly, the terminal device receives the third indication information from the network device. The third indication information indicates to send, in a third manner, the reference signal corresponding to the first port.

The third manner is: when the first port belongs to the first port set, sending, by using a fifth resource, the reference signal corresponding to the first port; or when the first port belongs to the second port set, sending, by using a sixth resource, the reference signal corresponding to the first port. The fifth resource and the sixth resource are on different frequency domain resources. For example, the fifth resource is the RE 1 and the RE 5 in the symbol 2, and the sixth resource is the RE 3 and the RE 7 in the symbol 2. For specific content, refer to the following manner A5. Details are not described herein.

Optionally, the third indication information may be sent by using a message (for example, an RRC message), or may be carried in control information (for example, DCI). The third indication information may directly indicate to send, in the third manner, the reference signal corresponding to the first port. For example, when the third indication information is a third value, the third indication information may indicate to send, in the third manner, the reference signal corresponding to the first port. Alternatively, the third indication information may indirectly indicate to send, in the third manner, the reference signal corresponding to the first port. For example, the third indication information includes a third port index, and the third port index indicates the third manner. For example, when a reference signal of a port Z is dedicated to transmission in the third manner, a port index of the port Z may be the third port index, where Z is a nonnegative integer.

Optionally, when any one of the condition I to the condition IV is met, the network device may determine that the reference signal of the first port needs to be sent in the third manner, and send the third indication information to the terminal device.

Q2: The terminal device sends, by using the fifth resource or the sixth resource, the reference signal corresponding to the first port. Correspondingly, the network device receives, by using the fifth resource or the sixth resource, the reference signal corresponding to the first port.

According to the method, the terminal device may transmit, in the third manner as indicated by the network device, the reference signal corresponding to the first port. In this way, the network device may flexibly configure a manner in which the terminal device sends the reference signal, to adapt to DMRS channel estimation capabilities in different scenarios.

It should be understood that, in this application, O1, P1 and P2, and Q1 and Q2 may be used in combination.

For example, when O1 is combined with P1 and P2, the network device may indicate the terminal device to send, in the first manner and the second manner, the reference signal corresponding to the first port. In this case, for a cover code that corresponds to the reference signal corresponding to the first port and that is on each resource, refer to the following manner A3, manner B2, manner C2, and manner D2. Details are not described herein. In addition, when any one of the condition 1 to the condition 4 and the condition I to the condition IV is met, the network device may determine to send, in the first manner and the second manner, the reference signal corresponding to the first port. For example, when the resource used for the transmission of the DMRS is on the edge sub-band, the network device may determine to send, in the first manner and the second manner, the reference signal corresponding to the first port.

For another example, when O1 is combined with Q1 and Q2, the network device may indicate the terminal device to send, in the first manner and the third manner, the reference signal corresponding to the first port. In this case, for a cover code that corresponds to the reference signal corresponding to the first port and that is on each resource, refer to the following manner A4. Details are not described herein. In addition, when any one of the condition 1 to the condition 4 and the condition I to the condition IV is met, the network device may determine to send, in the first manner and the third manner, the reference signal corresponding to the first port.

Optionally, in a possible implementation, elements in a sequence of the reference signal corresponding to the first port are in one-to-one correspondence with REs in the first resource, and the elements in the sequence of the reference signal corresponding to the first port are in one-to-one correspondence with REs in the second resource.

A quantity of the elements included in the sequence of the reference signal corresponding to the first port may be one of the following: 2, 4, 6, 8, and 12.

For example, a sequence of a reference signal 1 corresponding to the port 0 includes two elements: an element 1 and an element 2, the first resource is the RE 1 and the RE 3 in the symbol 2, and the second resource is the RE 1 and the RE 3 in the symbol 11. The element 1 and the element 2 may be respectively mapped to the RE 1 and the RE 3 in the symbol 2, and the element 1 and the element 2 may be respectively mapped to the RE 1 and the RE 3 in the symbol 11. A sequence of a reference signal 2 corresponding to the port 8 includes two elements: an element 3 and an element 4. The element 3 and the element 4 may be respectively mapped to the RE 1 and the RE 3 in the symbol 2, and the element 3 and the element 4 may be respectively mapped to the RE 1 and the RE 3 in the symbol 11. The reference signal 1 corresponds to a cover code {+1, +1} (that is, the first cover code) on the first resource and the second resource respectively, and the reference signal 2 corresponds to a cover code {+1, -1} (that is, the second cover code) on the first resource and the second resource respectively.

According to the method, the reference signals corresponding to the ports in both the first port set and the second port set may be repeatedly mapped to the first resource and the second resource. In addition, the reference signal corresponding to the port in the first port set corresponds to the first cover code on the resources on the plurality of OFDM symbols, the reference signal corresponding to the port in the first port set corresponds to the second cover code on the resources on the plurality of OFDM symbols, and the first cover code is different from the second cover code. Therefore, the quantity of ports may be expanded by using the plurality of non-adjacent OFDM symbols, to support the larger quantity of transport streams.

In this application, DMRSs corresponding to the ports may be distinguished based on different DMRS configuration types and different quantities of symbols, so that the quantity of ports can be expanded. The following separately describes, for the case 1 to the case 4, how to distinguish between the DMRSs corresponding to the ports.

Case 1: One group of additional DMRS symbols are added on a basis of a front-loaded single-symbol Type 1 DMRS.

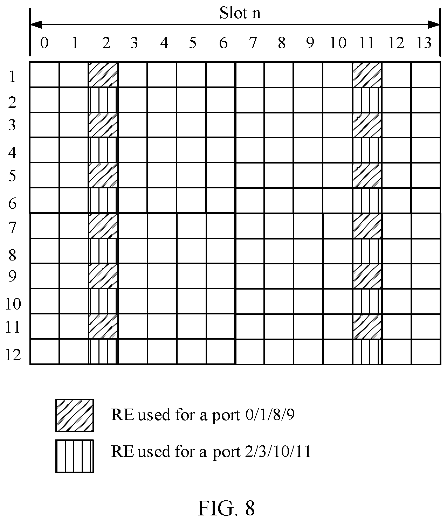

FIG. 8 shows a time-frequency resource mapping method in the case 1. As shown in FIG. 8, four ports may be newly added on a basis of existing four ports (that is, a port 0 to a port 3), and port indexes of the four newly added ports may be 8 to 11. Both DMRSs corresponding to the existing ports and DMRSs corresponding to the newly added ports may be mapped to REs corresponding to a symbol 2 (that is, a front-loaded symbol) and a symbol 11 (that is, an additional DMRS symbol).

The following uses the port 0, the port 1, the port 8, and the port 9 as examples to describe how to distinguish between the DMRSs corresponding to the ports.

A first port set includes the port 0 and the port 1, and a second port set includes the port 8 and the port 9. Transmission of a DMRS corresponding to the first port set and a DMRS corresponding to the second port set may be performed by using a same resource. In this application, the DMRSs corresponding to the ports may be distinguished in one of the following manners.

Manner A1: The DMRSs corresponding to the ports are distinguished by using TD-OCCs.

In the manner A1, a port in the first port set and a port in the second port set correspond to different time domain OCCs, so that a DMRS corresponding to the port in the first port set and a DMRS corresponding to the port in the second port set can be distinguished. In addition, ports in the first port set correspond to different frequency domain OCCs, and ports in the second port set correspond to different frequency domain OCCs, so that DMRSs corresponding to different ports can be distinguished inside the first port set and the second port set.

Table 5A shows an example of cover code elements that correspond to DMRS sequences corresponding to the ports and that are on resources in the manner A1. As shown in Table 5A, for the existing port 0 and port 1, DMRS sequences corresponding to the port 0 and the port 1 do not change, and correspond to a time domain OCC {+1, +1} on the symbol 2 and the symbol 11 respectively. For the newly added port 8, a DMRS sequence corresponding to the port 8 is the same as that corresponds to the existing port 0 on the symbol 2, and corresponds to a time domain OCC {+1, -1} on the symbol 2 and the symbol 11 respectively. For the newly added port 9, a DMRS sequence corresponding to the port 9 is the same as that corresponds to the existing port 1 on the symbol 2, and corresponds to a time domain OCC {+1, -1} on the symbol 2 and the symbol 11 respectively. In this way, the DMRS corresponding to the newly added port and the DMRS corresponding to the existing port may be distinguished by using time domain OCCs with a length of 2, to implement code domain orthogonality.

**Table 5A**

| | Symbol 2 | | | | Symbol 11 | | | |
|---|---|---|---|---|---|---|---|---|
| | Port 0 | Port 1 | Port 8 | Port 9 | Port 0 | Port 1 | Port 8 | Port 9 |
| Subcarrier 1 | 1 | 1 | 1 | 1 | 1 | 1 | -1 | -1 |
| Subcarrier 3 | 1 | -1 | 1 | -1 | 1 | -1 | -1 | 1 |
| Subcarrier 5 | 1 | 1 | 1 | 1 | 1 | 1 | -1 | -1 |
| Subcarrier 7 | 1 | -1 | 1 | -1 | 1 | -1 | -1 | 1 |
| Subcarrier 9 | 1 | 1 | 1 | 1 | 1 | 1 | -1 | -1 |
| Subcarrier 11 | 1 | -1 | 1 | -1 | 1 | -1 | -1 | 1 |
| Subcarrier 13 | 1 | 1 | 1 | 1 | 1 | 1 | -1 | -1 |
| Subcarrier 15 | 1 | -1 | 1 | -1 | 1 | -1 | -1 | 1 |
| Subcarrier 17 | 1 | 1 | 1 | 1 | 1 | 1 | -1 | -1 |
| Subcarrier 19 | 1 | -1 | 1 | -1 | 1 | -1 | -1 | 1 |
| Subcarrier 21 | 1 | 1 | 1 | 1 | 1 | 1 | -1 | -1 |
| Subcarrier 23 | 1 | -1 | 1 | -1 | 1 | -1 | -1 | 1 |

In the manner A1, for the port 2, the port 3, the port 10, and the port 11, the DMRSs corresponding to the ports may also be distinguished in a manner similar to that of the port 0, the port 1, the port 8, and the port 9. For example, cover code elements that correspond to DMRS sequences corresponding to the ports and that are on resources may be shown in Table 5B.

**Table 5B**

| | Symbol 2 | | | | Symbol 11 | | | |
|---|---|---|---|---|---|---|---|---|
| | Port 2 | Port 3 | Port 10 | Port 11 | Port 2 | Port 3 | Port 10 | Port 11 |
| Subcarrier 2 | 1 | 1 | 1 | 1 | 1 | 1 | -1 | -1 |
| Subcarrier 4 | 1 | -1 | 1 | -1 | 1 | -1 | -1 | 1 |
| Subcarrier 6 | 1 | 1 | 1 | 1 | 1 | 1 | -1 | -1 |
| Subcarrier 8 | 1 | -1 | 1 | -1 | 1 | -1 | -1 | 1 |
| Subcarrier 10 | 1 | 1 | 1 | 1 | 1 | 1 | -1 | -1 |
| Subcarrier 12 | 1 | -1 | 1 | -1 | 1 | -1 | -1 | 1 |
| Subcarrier 14 | 1 | 1 | 1 | 1 | 1 | 1 | -1 | -1 |
| Subcarrier 16 | 1 | -1 | 1 | -1 | 1 | -1 | -1 | 1 |
| Subcarrier 18 | 1 | 1 | 1 | 1 | 1 | 1 | -1 | -1 |
| Subcarrier 20 | 1 | -1 | 1 | -1 | 1 | -1 | -1 | 1 |
| Subcarrier 22 | 1 | 1 | 1 | 1 | 1 | 1 | -1 | -1 |
| Subcarrier 24 | 1 | -1 | 1 | -1 | 1 | -1 | -1 | 1 |

In the manner, code division orthogonality may be implemented on different time domain symbols in a TD-OCC manner to distinguish between DMRSs corresponding to different ports, so as to expand the DMRS ports by combining a plurality of symbols in time domain, that is, increase a quantity of the DMRS ports.

Manner A2: The DMRSs corresponding to the ports are distinguished by using frequency division orthogonal cover codes (time division orthogonal cover codes, FD-OCCs).

In the manner A2, a port in the first port set and a port in the second port set correspond to different frequency domain OCCs, so that a DMRS corresponding to the port in the first port set and a DMRS corresponding to the port in the second port set can be distinguished. In addition, ports in the first port set correspond to different frequency domain OCCs, and ports in the second port set correspond to different frequency domain OCCs, so that DMRSs corresponding to different ports can be distinguished inside the first port set and the second port set.

Table 6A shows an example of cover code elements that correspond to DMRS sequences corresponding to the ports and that are on resources in the manner A2. As shown in Table 6A, in the symbol 2 and the symbol 11, the existing port 0 corresponds to a frequency domain OCC {+1, +1, +1, +1} on a subcarrier 1, a subcarrier 3, a subcarrier 5, and a subcarrier 7 respectively; the existing port 1 corresponds to a frequency domain OCC {+1, -1, +1, -1} on the subcarrier 1, the subcarrier 3, the subcarrier 5, and the subcarrier 7 respectively; the newly added port 8 corresponds to a frequency domain OCC {+1, +1, -1, -1} on the subcarrier 1, the subcarrier 3, the subcarrier 5, and the subcarrier 7 respectively; and the newly added port 9 corresponds to a frequency domain OCC {+1, -1, -1, +1} on the subcarrier 1, the subcarrier 3, the subcarrier 5, and the subcarrier 7 respectively. In this way, the DMRS corresponding to the newly added port and the DMRS corresponding to the existing port may be distinguished by using frequency domain OCCs with a length of 4, to implement code domain orthogonality.

**Table 6A**

| | Symbol 2 | | | | Symbol 11 | | | |
|---|---|---|---|---|---|---|---|---|
| | Port 0 | Port 1 | Port 8 | Port 9 | Port 0 | Port 1 | Port 8 | Port 9 |
| Subcarrier 1 | 1 | 1 | 1 | 1 | 1 | 1 | 1 | 1 |
| Subcarrier 3 | 1 | -1 | 1 | -1 | 1 | -1 | 1 | -1 |
| Subcarrier 5 | 1 | 1 | -1 | -1 | 1 | 1 | -1 | -1 |
| Subcarrier 7 | 1 | -1 | -1 | 1 | 1 | -1 | -1 | 1 |
| Subcarrier 9 | 1 | 1 | 1 | 1 | 1 | 1 | 1 | 1 |
| Subcarrier 11 | 1 | -1 | 1 | -1 | 1 | -1 | 1 | -1 |
| Subcarrier 13 | 1 | 1 | -1 | -1 | 1 | 1 | -1 | -1 |
| Subcarrier 15 | 1 | -1 | -1 | 1 | 1 | -1 | -1 | 1 |
| Subcarrier 17 | 1 | 1 | 1 | 1 | 1 | 1 | 1 | 1 |
| Subcarrier 19 | 1 | -1 | 1 | -1 | 1 | -1 | 1 | -1 |
| Subcarrier 21 | 1 | 1 | -1 | -1 | 1 | 1 | -1 | -1 |
| **Subcarrier** 23 | 1 | -1 | -1 | 1 | 1 | -1 | -1 | 1 |

In the manner A2, for the port 2, the port 3, the port 10, and the port 11, the DMRSs corresponding to the ports may also be distinguished in a manner similar to that of the port 0, the port 1, the port 8, and the port 9. For example, cover code elements that correspond to DMRS sequences corresponding to the ports and that are on resources may be shown in Table 6B.

**Table 6B**

| | Symbol 2 | | | | Symbol 11 | | | |
|---|---|---|---|---|---|---|---|---|
| | Port 2 | Port 3 | Port 10 | Port 11 | Port 2 | Port 3 | Port 10 | Port 11 |
| Subcarrier 2 | 1 | 1 | 1 | 1 | 1 | 1 | 1 | 1 |
| Subcarrier 4 | 1 | -1 | 1 | -1 | 1 | -1 | 1 | -1 |
| Subcarrier 6 | 1 | 1 | -1 | -1 | 1 | 1 | -1 | -1 |
| Subcarrier 8 | 1 | -1 | -1 | 1 | 1 | -1 | -1 | 1 |
| Subcarrier 10 | 1 | 1 | 1 | 1 | 1 | 1 | 1 | 1 |
| Subcarrier 12 | 1 | -1 | 1 | -1 | 1 | -1 | 1 | -1 |
| Subcarrier 14 | 1 | 1 | -1 | -1 | 1 | 1 | -1 | -1 |
| Subcarrier 16 | 1 | -1 | -1 | 1 | 1 | -1 | -1 | 1 |
| Subcarrier 18 | 1 | 1 | 1 | 1 | 1 | 1 | 1 | 1 |
| Subcarrier 20 | 1 | -1 | 1 | -1 | 1 | -1 | 1 | -1 |
| Subcarrier 22 | 1 | 1 | -1 | -1 | 1 | 1 | -1 | -1 |
| Subcarrier 24 | 1 | -1 | -1 | 1 | 1 | -1 | -1 | 1 |

In the manner, code division orthogonality may be implemented on different frequency domain resources in an FD-OCC manner to distinguish between DMRSs corresponding to different ports, so as to increase a quantity of the DMRS ports.

Manner A3: The DMRSs corresponding to the ports are distinguished by using FD-OCCs and TD-OCCs.

In the manner A3, a port in the first port set and a port in the second port set correspond to different time domain OCCs, and the port in the first port set and the port in the second port set correspond to different frequency domain OCCs, so that a DMRS corresponding to the port in the first port set and a DMRS corresponding to the port in the second port set can be distinguished. In addition, ports in the first port set correspond to different frequency domain OCCs, and ports in the second port set correspond to different frequency domain OCCs, so that DMRSs corresponding to different ports can be distinguished inside the first port set and the second port set.

Table 7A shows an example of cover code elements that correspond to DMRS sequences corresponding to the ports and that are on resources in the manner A3. As shown in Table 7A, in the symbol 2, the existing port 0 corresponds to a frequency domain OCC {+1, +1, +1, +1} on a subcarrier 1, a subcarrier 3, a subcarrier 5, and a subcarrier 7 respectively; the existing port 1 corresponds to a frequency domain OCC {+1, -1, +1, -1} on the subcarrier 1, the subcarrier 3, the subcarrier 5, and the subcarrier 7 respectively; the newly added port 8 corresponds to a frequency domain OCC {+1, +1, -1, -1} on the subcarrier 1, the subcarrier 3, the subcarrier 5, and the subcarrier 7 respectively; and the newly added port 9 corresponds to a frequency domain OCC {+1, -1, -1, +1} on the subcarrier 1, the subcarrier 3, the subcarrier 5, and the subcarrier 7 respectively.

The existing port 0 corresponds to a time domain OCC {+1, +1} on the symbol 2 and the symbol 11 respectively. The existing port 1 corresponds to a time domain OCC {+1, +1} on the symbol 2 and the symbol 11 respectively. The newly added port 8 corresponds to a time domain OCC {+1, -1} on the symbol 2 and the symbol 11 respectively. The newly added port 9 corresponds to a time domain OCC {+1, -1} on the symbol 2 and the symbol 11 respectively.

In this way, the DMRS corresponding to the newly added port and the DMRS corresponding to the existing port may be distinguished by using time domain OCCs with a length of 2 and frequency domain OCCs with a length of 4, to implement code domain orthogonality.

**Table 7A**

| | Symbol 2 | | | | Symbol 11 | | | |
|---|---|---|---|---|---|---|---|---|
| | Port 0 | Port 1 | Port 8 | Port 9 | Port 0 | Port 1 | Port 8 | Port 9 |
| Subcarrier 1 | 1 | 1 | 1 | 1 | 1 | 1 | -1 | -1 |
| Subcarrier 3 | 1 | -1 | 1 | -1 | 1 | -1 | -1 | 1 |
| Subcarrier 5 | 1 | 1 | -1 | -1 | 1 | 1 | 1 | 1 |
| Subcarrier 7 | 1 | -1 | -1 | 1 | 1 | -1 | 1 | -1 |
| Subcarrier 9 | 1 | 1 | 1 | 1 | 1 | 1 | -1 | -1 |
| Subcarrier 11 | 1 | -1 | 1 | -1 | 1 | -1 | -1 | 1 |
| Subcarrier 13 | 1 | 1 | -1 | -1 | 1 | 1 | 1 | 1 |
| Subcarrier 15 | 1 | -1 | -1 | 1 | 1 | -1 | 1 | -1 |
| Subcarrier 17 | 1 | 1 | 1 | 1 | 1 | 1 | -1 | -1 |
| Subcarrier 19 | 1 | -1 | 1 | -1 | 1 | -1 | -1 | 1 |
| Subcarrier 21 | 1 | 1 | -1 | -1 | 1 | 1 | 1 | 1 |
| Subcarrier 23 | 1 | -1 | -1 | 1 | 1 | -1 | 1 | -1 |

In the manner A3, for the port 2, the port 3, the port 10, and the port 11, the DMRSs corresponding to the ports may also be distinguished in a manner similar to that of the port 0, the port 1, the port 8, and the port 9. For example, cover code elements that correspond to DMRS sequences corresponding to the ports and that are on resources may be shown in Table 7B.

**Table 7B**

| | Symbol 2 | | | | Symbol 11 | | | |
|---|---|---|---|---|---|---|---|---|
| | Port 2 | Port 3 | Port 10 | Port 11 | Port 2 | Port 3 | Port 10 | Port 11 |
| Subcarrier 2 | 1 | 1 | 1 | 1 | 1 | 1 | -1 | -1 |
| Subcarrier 4 | 1 | -1 | 1 | -1 | 1 | -1 | -1 | 1 |
| Subcarrier 6 | 1 | 1 | -1 | -1 | 1 | 1 | 1 | 1 |
| Subcarrier 8 | 1 | -1 | -1 | 1 | 1 | -1 | 1 | -1 |
| Subcarrier 10 | 1 | 1 | 1 | 1 | 1 | 1 | -1 | -1 |
| Subcarrier 12 | 1 | -1 | 1 | -1 | 1 | -1 | -1 | 1 |
| Subcarrier 14 | 1 | 1 | -1 | -1 | 1 | 1 | 1 | 1 |
| Subcarrier 16 | 1 | -1 | -1 | 1 | 1 | -1 | 1 | -1 |
| Subcarrier 18 | 1 | 1 | 1 | 1 | 1 | 1 | -1 | -1 |
| Subcarrier 20 | 1 | -1 | 1 | -1 | 1 | -1 | -1 | 1 |
| Subcarrier 22 | 1 | 1 | -1 | -1 | 1 | 1 | 1 | 1 |
| Subcarrier 24 | 1 | -1 | -1 | 1 | 1 | -1 | 1 | -1 |

In the manner, the DMRS corresponding to the newly added port and the DMRS corresponding to the existing port may be distinguished by combining the frequency domain OCC and the time domain OCC. Therefore, when a quantity of DMRS ports is increased, an interference suppression capability between the newly added port and the existing port is enhanced, channel estimation performance is improved, and a larger multiple-user (multiple user, MU) pairing gain is obtained.

Manner A4: The DMRSs corresponding to the ports are distinguished through frequency division cyclic shift (time division cyclic shift, FD-CS) and TD-OCCs.

In the manner A4, a port in the first port set and a port in the second port set correspond to different time domain OCCs, and cover code sequences corresponding to the port in the first port set and the port in the second port set are orthogonal, so that a DMRS corresponding to the port in the first port set and a DMRS corresponding to the port in the second port set can be distinguished. In addition, ports in the first port set correspond to different frequency domain OCCs, and ports in the second port set correspond to different frequency domain OCCs, so that DMRSs corresponding to different ports can be distinguished inside the first port set and the second port set.

Table 8A shows an example of cover code elements that correspond to DMRS sequences corresponding to the ports and that are on resources in the manner A4.

As shown in Table 8A, in the symbol 2, the existing port 0 corresponds to a frequency domain cover code element {+1, +1, +1, +1} on a subcarrier 1, a subcarrier 3, a subcarrier 5, and a subcarrier 7 respectively; the existing port 1 corresponds to a frequency domain cover code element {+1, -1, +1, -1} on the subcarrier 1, the subcarrier 3, the subcarrier 5, and the subcarrier 7 respectively; the newly added port 8 corresponds to a frequency domain cover code element {+1, +j, -1, -j} on the subcarrier 1, the subcarrier 3, the subcarrier 5, and the subcarrier 7 respectively; and the newly added port 9 corresponds to a frequency domain cover code element {+1, -j, -1, +j} on the subcarrier 1, the subcarrier 3, the subcarrier 5, and the subcarrier 7 respectively.

The existing port 0 corresponds to a time domain OCC {+1, +1} on the symbol 2 and the symbol 11 respectively. The existing port 1 corresponds to a time domain OCC {+1, +1} on the symbol 2 and the symbol 11 respectively. The newly added port 8 corresponds to a time domain OCC {+1, -1} on the symbol 2 and the symbol 11 respectively. The newly added port 9 corresponds to a time domain OCC {+1, -1} on the symbol 2 and the symbol 11 respectively.

In this way, the DMRS corresponding to the newly added port and the DMRS corresponding to the existing port may be distinguished by using frequency domain cover code sequences with a length of 4 and time domain OCCs with a length of 2, to implement code domain orthogonality.

**Table 8A**

| | Symbol 2 | | | | Symbol 11 | | | |
|---|---|---|---|---|---|---|---|---|
| | Port 0 | Port 1 | Port 8 | Port 9 | Port 0 | Port 1 | Port 8 | Port 9 |
| Subcarrier 1 | 1 | 1 | 1 | 1 | 1 | 1 | -1 | -1 |
| Subcarrier 3 | 1 | -1 | j | -j | 1 | -1 | -j | j |
| Subcarrier 5 | 1 | 1 | -1 | -1 | 1 | 1 | 1 | 1 |
| Subcarrier 7 | 1 | -1 | -j | j | 1 | -1 | j | -j |
| Subcarrier 9 | 1 | 1 | 1 | 1 | 1 | 1 | -1 | -1 |
| Subcarrier 11 | 1 | -1 | j | -j | 1 | -1 | -j | j |
| Subcarrier 13 | 1 | 1 | -1 | -1 | 1 | 1 | 1 | 1 |
| Subcarrier 15 | 1 | -1 | -j | j | 1 | -1 | j | -j |
| Subcarrier 17 | 1 | 1 | 1 | 1 | 1 | 1 | -1 | -1 |
| Subcarrier 19 | 1 | -1 | j | -j | 1 | -1 | -j | j |
| Subcarrier 21 | 1 | 1 | -1 | -1 | 1 | 1 | 1 | 1 |
| Subcarrier 23 | 1 | -1 | -j | j | 1 | -1 | j | -j |

In the manner A4, for the port 2, the port 3, the port 10, and the port 11, the DMRSs corresponding to the ports may also be distinguished in a manner similar to that of the port 0, the port 1, the port 8, and the port 9. For example, cover code elements that correspond to DMRS sequences corresponding to the ports and that are on resources may be shown in Table 8B.

**Table 8B**

| | Symbol 2 | | | | Symbol 11 | | | |
|---|---|---|---|---|---|---|---|---|
| | Port 2 | Port 3 | Port 10 | Port 11 | Port 2 | Port 3 | Port 10 | Port 11 |
| Subcarrier 2 | 1 | 1 | 1 | 1 | 1 | 1 | -1 | -1 |
| Subcarrier 4 | 1 | -1 | j | -j | 1 | -1 | -j | j |
| Subcarrier 6 | 1 | 1 | -1 | -1 | 1 | 1 | 1 | 1 |
| Subcarrier 8 | 1 | -1 | -j | j | 1 | -1 | j | -j |
| Subcarrier 10 | 1 | 1 | 1 | 1 | 1 | 1 | -1 | -1 |
| Subcarrier 12 | 1 | -1 | j | -j | 1 | -1 | -j | j |
| Subcarrier 14 | 1 | 1 | -1 | -1 | 1 | 1 | 1 | 1 |
| Subcarrier 16 | 1 | -1 | -j | j | 1 | -1 | j | -j |
| Subcarrier 18 | 1 | 1 | 1 | 1 | 1 | 1 | -1 | -1 |
| Subcarrier 20 | 1 | -1 | j | -j | 1 | -1 | -j | j |
| Subcarrier 22 | 1 | 1 | -1 | -1 | 1 | 1 | 1 | 1 |
| Subcarrier 24 | 1 | -1 | -j | j | 1 | -1 | j | -j |

In the manner, the DMRS corresponding to the newly added port and the DMRS corresponding to the existing port may be distinguished by combining the frequency domain cover code sequence and the time domain OCC. Therefore, when a quantity of DMRS ports is increased, an interference suppression capability between the newly added port and the existing port is enhanced, channel estimation performance is improved, and a larger multiple-user (multiple user, MU) pairing gain is obtained.

Manner A5: The DMRSs corresponding to the ports are distinguished through FDM.

In the manner A5, a port in the first port set and a port in the second port set correspond to different subcarriers in frequency domain, so that a DMRS corresponding to the port in the first port set and a DMRS corresponding to the port in the second port set can be distinguished. In addition, ports in the first port set correspond to different frequency domain OCCs, and ports in the second port set correspond to different frequency domain OCCs, so that DMRSs corresponding to different ports can be distinguished inside the first port set and the second port set.

Table 9A shows an example of cover code elements that correspond to DMRS sequences corresponding to the ports and that are on resources in the manner A5. In the symbol 2 and the symbol 11, DMRSs corresponding to the existing port 0 and port 1 may be mapped to a subcarrier 1 and a subcarrier 5, and DMRSs corresponding to the newly added port 8 and port 9 may be mapped to a subcarrier 3 and a subcarrier 7. In this way, frequency division multiplexing may be performed between the DMRS corresponding to the newly added port and the DMRS corresponding to the existing port, to implement frequency domain orthogonality.

**Table 9A**

| | Symbol 2 | | | | Symbol 11 | | | |
|---|---|---|---|---|---|---|---|---|
| | Port 0 | Port 1 | Port 8 | Port 9 | Port 0 | Port 1 | Port 8 | Port 9 |
| Subcarrier 1 | 1 | 1 | 0 | 0 | 1 | 1 | 0 | 0 |
| Subcarrier 3 | 0 | 0 | 1 | -1 | 0 | 0 | 1 | -1 |
| Subcarrier 5 | 1 | -1 | 0 | 0 | 1 | -1 | 0 | 0 |
| Subcarrier 7 | 0 | 0 | 1 | -1 | 0 | 0 | 1 | -1 |
| Subcarrier 9 | 1 | 1 | 0 | 0 | 1 | 1 | 0 | 0 |
| Subcarrier 11 | 0 | 0 | 1 | -1 | 0 | 0 | 1 | -1 |
| Subcarrier 13 | 1 | -1 | 0 | 0 | 1 | -1 | 0 | 0 |
| Subcarrier 15 | 0 | 0 | 1 | -1 | 0 | 0 | 1 | -1 |
| Subcarrier 17 | 1 | -1 | 0 | 0 | 1 | -1 | 0 | 0 |
| Subcarrier 19 | 0 | 0 | 1 | -1 | 0 | 0 | 1 | -1 |
| Subcarrier 21 | 1 | -1 | 0 | 0 | 1 | -1 | 0 | 0 |
| Subcarrier 23 | 0 | 0 | 1 | -1 | 0 | 0 | 1 | -1 |

In the manner A5, for the port 2, the port 3, the port 10, and the port 11, the DMRSs corresponding to the ports may also be distinguished in a manner similar to that of the port 0, the port 1, the port 8, and the port 9. For example, cover code elements that correspond to DMRS sequences corresponding to the ports and that are on resources may be shown in Table 9B.

**Table 9B**

| | Symbol 2 | | | | Symbol 11 | | | |
|---|---|---|---|---|---|---|---|---|
| | Port 2 | Port 3 | Port 10 | Port 11 | Port 2 | Port 3 | Port 10 | Port 11 |
| Subcarrier 2 | 1 | 1 | 0 | 0 | 1 | 1 | 0 | 0 |
| Subcarrier 4 | 0 | 0 | 1 | -1 | 0 | 0 | 1 | -1 |
| Subcarrier 6 | 1 | -1 | 0 | 0 | 1 | -1 | 0 | 0 |
| Subcarrier 8 | 0 | 0 | 1 | -1 | 0 | 0 | 1 | -1 |
| Subcarrier 10 | 1 | 1 | 0 | 0 | 1 | 1 | 0 | 0 |
| Subcarrier 12 | 0 | 0 | 1 | -1 | 0 | 0 | 1 | -1 |
| Subcarrier 14 | 1 | -1 | 0 | 0 | 1 | -1 | 0 | 0 |
| Subcarrier 16 | 0 | 0 | 1 | -1 | 0 | 0 | 1 | -1 |
| Subcarrier 18 | 1 | -1 | 0 | 0 | 1 | -1 | 0 | 0 |
| Subcarrier 20 | 0 | 0 | 1 | -1 | 0 | 0 | 1 | -1 |
| Subcarrier 22 | 1 | -1 | 0 | 0 | 1 | -1 | 0 | 0 |
| Subcarrier 24 | 0 | 0 | 1 | -1 | 0 | 0 | 1 | -1 |

In the manner, DMRSs corresponding to different ports may be distinguished on different frequency domain resources in a frequency division manner, to increase a quantity of the DMRS ports.

Case 2: One group of additional DMRS symbols are added on a basis of a front-loaded double-symbol Type 1 DMRS.

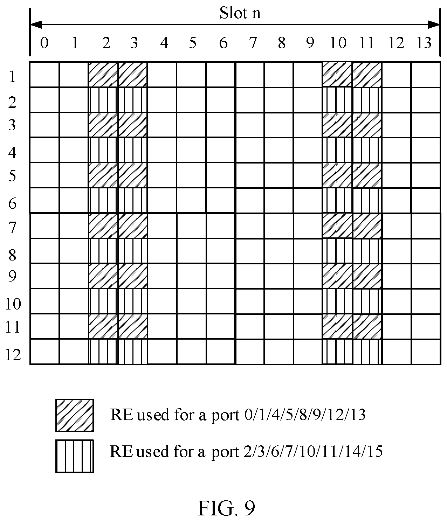

FIG. 9 shows a time-frequency resource mapping method in the case 2. As shown in FIG. 9, eight ports may be newly added on a basis of existing eight ports (that is, a port 0 to a port 7), and port indexes of the eight newly added ports may be 8 to 15. Both the existing ports and the newly added ports may be mapped to REs corresponding to a symbol 2, a symbol 3, a symbol 10, and a symbol 11, where the symbol 2 and the symbol 3 are front-loaded symbols, and the symbol 10 and the symbol 11 are additional DMRS symbols.

The following uses the port 0, the port 1, the port 4, the port 5, the port 8, the port 9, the port 12, and the port 13 as examples to describe how to distinguish between the DMRSs corresponding to the ports.

A first port set includes the port 0, the port 1, the port 4, and the port 5, and a second port set includes the port 8, the port 9, the port 12, and the port 13. Transmission of a DMRS corresponding to the first port set and a DMRS corresponding to the second port set may be performed by using a same resource. For the case 2, the DMRSs corresponding to the ports may be distinguished in a manner similar to any one of the manner A1 to the manner A5. The following specifically describes some of manners.

Manner B1: The DMRSs corresponding to the ports are distinguished by using TD-OCCs.

The manner B1 is similar to the manner A1. A port in the first port set and a port in the second port set correspond to different time domain OCCs. For example, for the existing port 0, port 1, port 4, and port 5, DMRS sequences corresponding to the port 0, the port 1, the port 4, and the port 5 do not change, and correspond to a time domain OCC {+1, +1} on a front-loaded symbol and an additional DMRS symbol respectively. For the newly added port 8, port 9, port 12, and port 13, DMRS sequences corresponding to the port 8, the port 9, the port 12, and the port 13 are respectively the same as those correspond to the existing port 0, port 1, port 4, and port 5 on the front-loaded symbol, and correspond to a time domain OCC {+1, -1} on the front-loaded symbol and the additional DMRS symbol respectively. In this way, code division multiplexing may be performed between a DMRS corresponding to the newly added port and a DMRS corresponding to the existing port, to implement code domain orthogonality.

Manner B2: The DMRSs corresponding to the ports are distinguished by using FD-OCCs and TD-OCCs.

The manner B2 is similar to the manner A3. A port in the first port set and a port in the second port set correspond to different time domain OCCs, and the port in the first port set and the port in the second port set correspond to different frequency domain OCCs.

Table 10A shows an example of cover code elements that correspond to DMRS sequences corresponding to the ports and that are on resources in the manner B2. As shown in Table 10A, in the symbol 2, the existing port 0 corresponds to a frequency domain OCC {+1, +1} on a subcarrier 1 and a subcarrier 3 respectively; the existing port 1 corresponds to a frequency domain OCC {+1, -1} on the subcarrier 1 and the subcarrier 3 respectively; the existing port 4 corresponds to a frequency domain OCC {+1, +1} on the subcarrier 1 and the subcarrier 3 respectively; the existing port 5 corresponds to a frequency domain OCC {+1, -1} on the subcarrier 1 and the subcarrier 3 respectively; the newly added port 8 corresponds to a frequency domain OCC {+1, +1} on the subcarrier 1 and the subcarrier 3 respectively; the newly added port 9 corresponds to a frequency domain OCC {+1, -1} on the subcarrier 1 and the subcarrier 3 respectively; the newly added port 12 corresponds to a frequency domain OCC {+1, +1} on the subcarrier 1 and the subcarrier 3 respectively; and the newly added port 13 corresponds to a frequency domain OCC {+1, -1} on the subcarrier 1 and the subcarrier 3 respectively.

The existing port 0 corresponds to a time domain OCC {+1, +1, +1, +1} on the symbol 2, the symbol 3, the symbol 10, and the symbol 11 respectively. The existing port 1 corresponds to a time domain OCC {+1, +1, +1, +1} on the symbol 2, the symbol 3, the symbol 10, and the symbol 11 respectively. The existing port 4 corresponds to a time domain OCC {+1, -1, +1, -1} on the symbol 2, the symbol 3, the symbol 10, and the symbol 11 respectively. The existing port 5 corresponds to a time domain OCC {+1, -1, +1, -1} on the symbol 2, the symbol 3, the symbol 10, and the symbol 11 respectively. The newly added port 8 corresponds to a time domain OCC {+1, +1, -1, -1} on the symbol 2, the symbol 3, the symbol 10, and the symbol 11 respectively. The newly added port 9 corresponds to a time domain OCC {+1, +1, -1, -1} on the symbol 2, the symbol 3, the symbol 10, and the symbol 11 respectively. The newly added port 12 corresponds to a time domain OCC {+1, +1, -1, +1} on the symbol 2, the symbol 3, the symbol 10, and the symbol 11 respectively. The newly added port 13 corresponds to a time domain OCC {+1, +1, -1, +1} on the symbol 2, the symbol 3, the symbol 10, and the symbol 11 respectively.

In this way, a DMRS corresponding to the newly added port and a DMRS corresponding to the existing port may be distinguished by using frequency domain OCCs with a length of 2 and time domain OCCs with a length of 4, to implement code domain orthogonality.

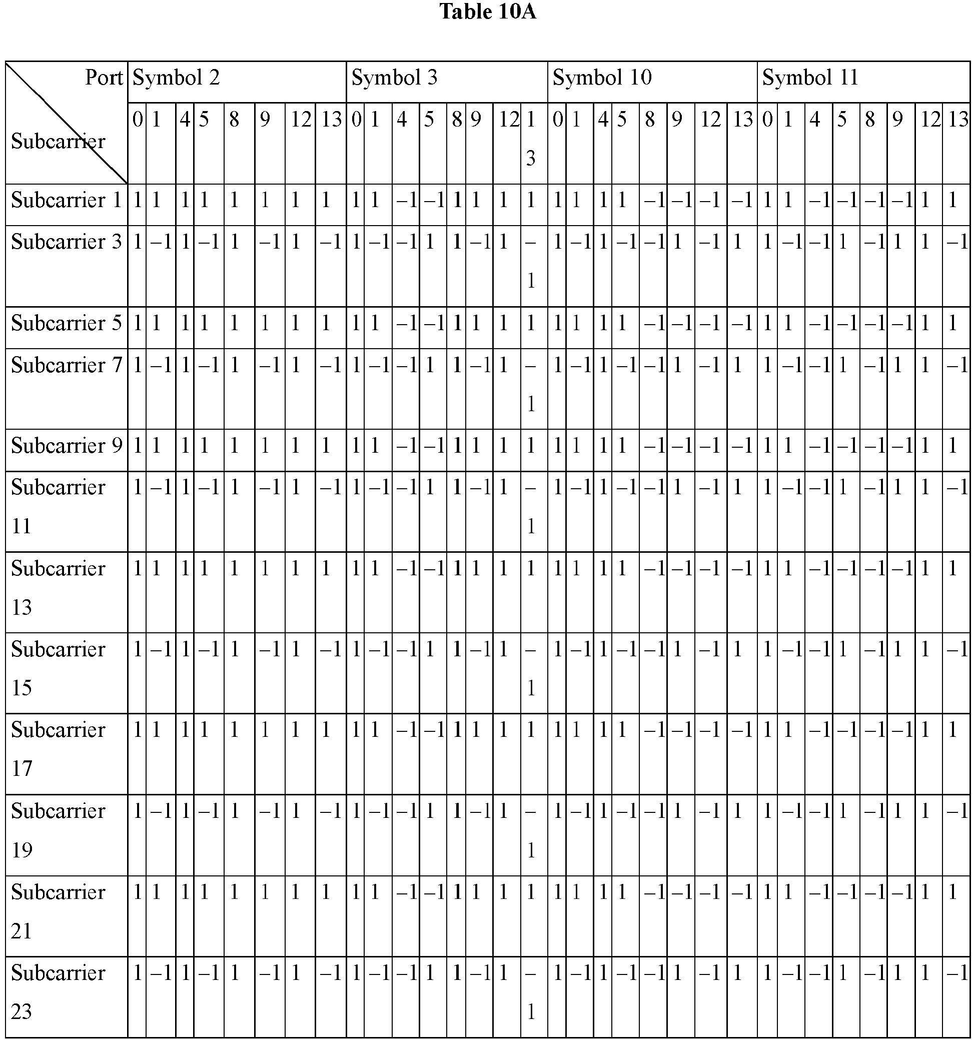

In addition, for the port 2, the port 3, the port 6, the port 7, the port 10, the port 11, the port 14, and the port 15, the DMRSs corresponding to the ports may also be distinguished in a manner similar to that of the port 0, the port 1, the port 4, the port 5, the port 8, the port 9, the port 12, and the port 13. For example, cover code elements that correspond to DMRS sequences corresponding to the ports and that are on resources may be shown in Table 10B.

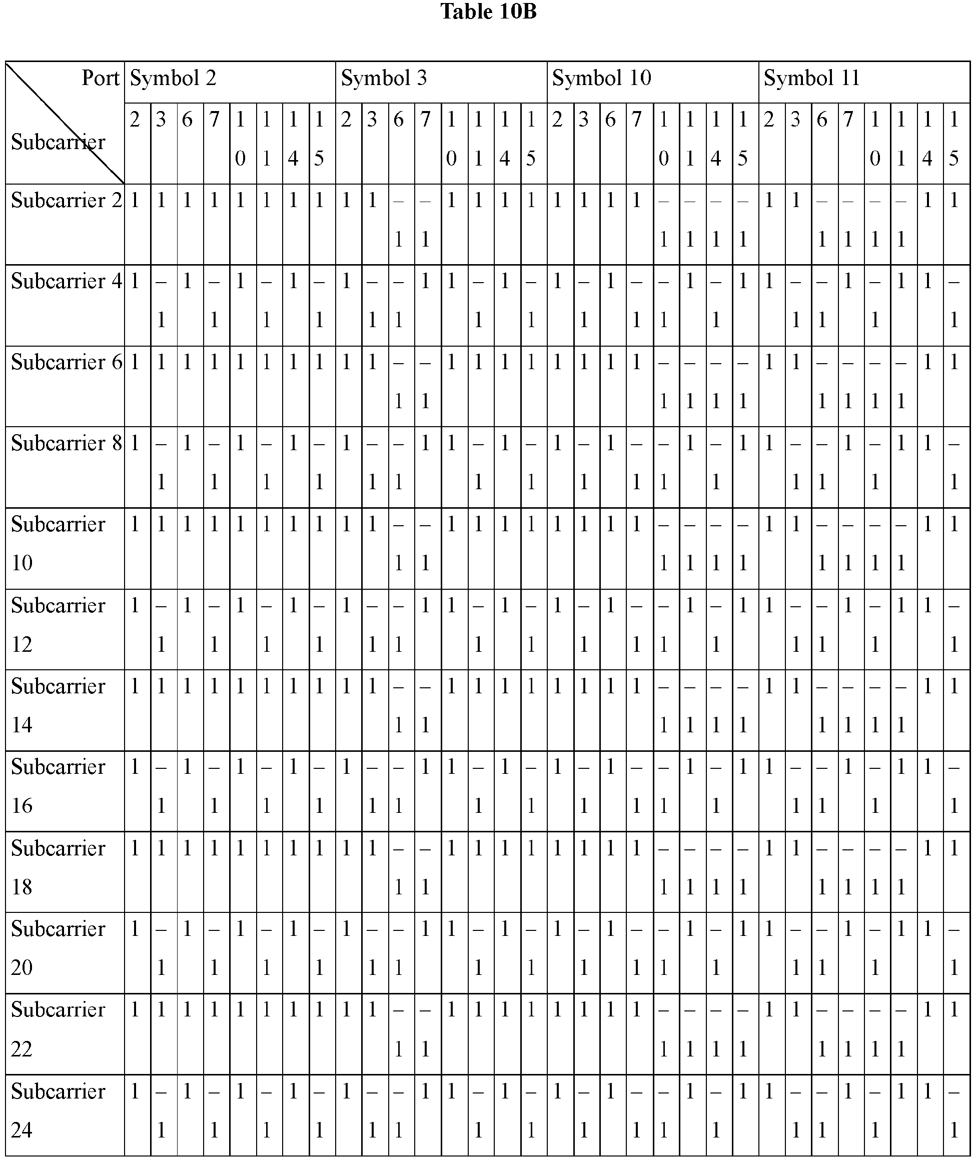

Table 11A shows another example of cover code elements that correspond to DMRS sequences corresponding to the ports and that are on resources in the manner B2. As shown in Table 11A, in the symbol 2, the existing port 0 corresponds to a frequency domain OCC {+1, +1, +1, +1} on a subcarrier 1, a subcarrier 3, a subcarrier 5, and a subcarrier 7 respectively; the existing port 1 corresponds to a frequency domain OCC {+1, -1, +1, -1} on the subcarrier 1, the subcarrier 3, the subcarrier 5, and the subcarrier 7 respectively; the existing port 4 corresponds to a frequency domain OCC {+1, +1, +1, +1} on the subcarrier 1, the subcarrier 3, the subcarrier 5, and the subcarrier 7 respectively; the existing port 5 corresponds to a frequency domain OCC {+1, -1, +1, -1} on the subcarrier 1, the subcarrier 3, the subcarrier 5, and the subcarrier 7 respectively; the newly added port 8 corresponds to a frequency domain OCC {+1, +1, -1, -1} on the subcarrier 1, the subcarrier 3, the subcarrier 5, and the subcarrier 7 respectively; the newly added port 9 corresponds to a frequency domain OCC {+1, -1, -1, +1} on the subcarrier 1, the subcarrier 3, the subcarrier 5, and the subcarrier 7 respectively; the newly added port 12 corresponds to a frequency domain OCC {+1, +1, -1, -1} on the subcarrier 1, the subcarrier 3, the subcarrier 5, and the subcarrier 7 respectively; and the newly added port 13 corresponds to a frequency domain OCC {+1, -1, -1, +1} on the subcarrier 1, the subcarrier 3, the subcarrier 5, and the subcarrier 7 respectively.

The existing port 0 corresponds to a time domain OCC {+1, +1, +1, +1} on the symbol 2, the symbol 3, the symbol 10, and the symbol 11 respectively. The existing port 1 corresponds to a time domain OCC {+1, +1, +1, +1} on the symbol 2, the symbol 3, the symbol 10, and the symbol 11 respectively. The existing port 4 corresponds to a time domain OCC {+1, -1, +1, -1} on the symbol 2, the symbol 3, the symbol 10, and the symbol 11 respectively. The existing port 5 corresponds to a time domain OCC {+1, -1, +1, -1} on the symbol 2, the symbol 3, the symbol 10, and the symbol 11 respectively. The newly added port 8 corresponds to a time domain OCC {+1, +1, -1, -1} on the symbol 2, the symbol 3, the symbol 10, and the symbol 11 respectively. The newly added port 9 corresponds to a time domain OCC {+1, +1, -1, -1} on the symbol 2, the symbol 3, the symbol 10, and the symbol 11 respectively. The newly added port 12 corresponds to a time domain OCC {+1, -1, -1, +1} on the symbol 2, the symbol 3, the symbol 10, and the symbol 11 respectively. The newly added port 13 corresponds to a time domain OCC {+1, -1, -1, +1} on the symbol 2, the symbol 3, the symbol 10, and the symbol 11 respectively.

In this way, a DMRS corresponding to the newly added port and a DMRS corresponding to the existing port may be distinguished by using frequency domain OCCs with a length of 4 and time domain OCCs with a length of 4, to implement code domain orthogonality.

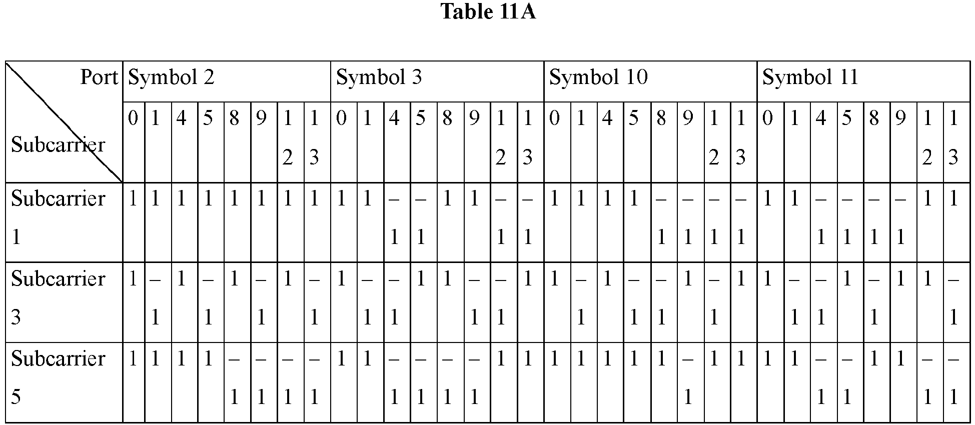

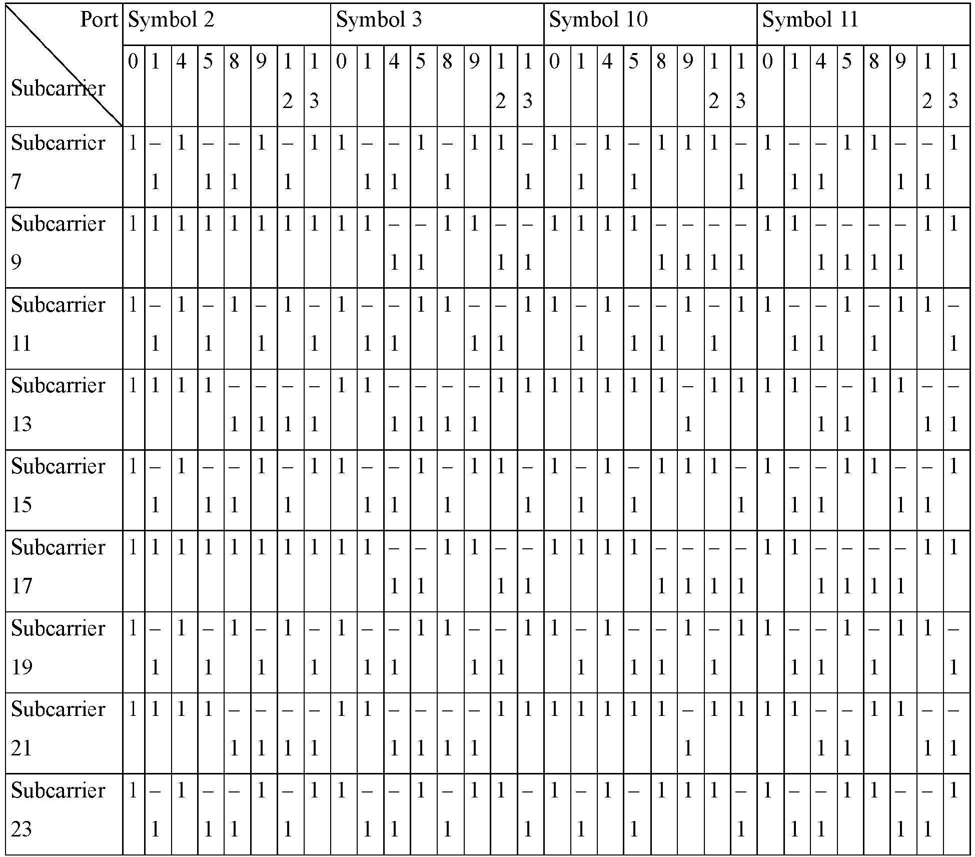

In addition, for the port 2, the port 3, the port 6, the port 7, the port 10, the port 11, the port 14, and the port 15, the DMRSs corresponding to the ports may also be distinguished in a manner similar to that of the port 0, the port 1, the port 4, the port 5, the port 8, the port 9, the port 12, and the port 13. For example, cover code elements that correspond to DMRS sequences corresponding to the ports and that are on resources may be shown in Table 11B.

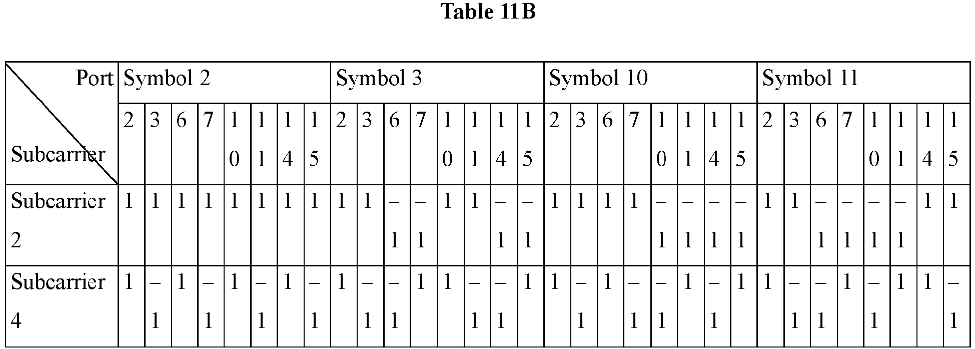

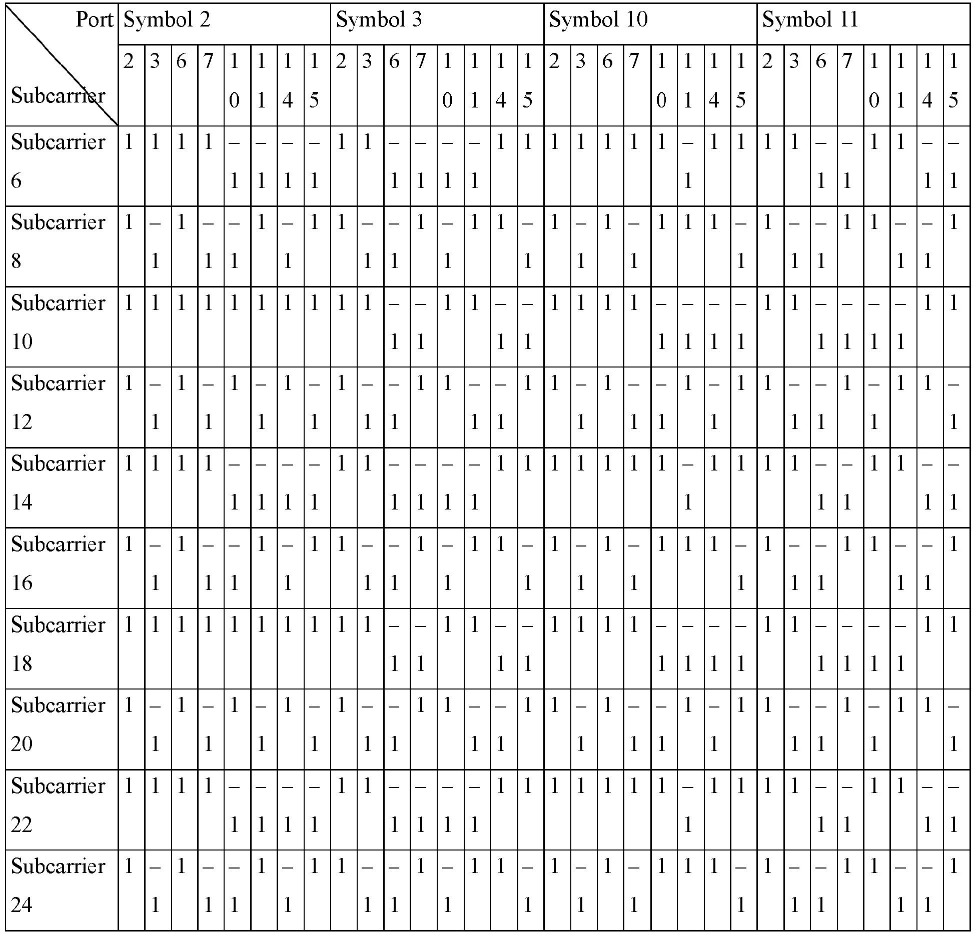

Case 3: One group of additional DMRS symbols are added on a basis of a front-loaded single-symbol Type 2 DMRS.

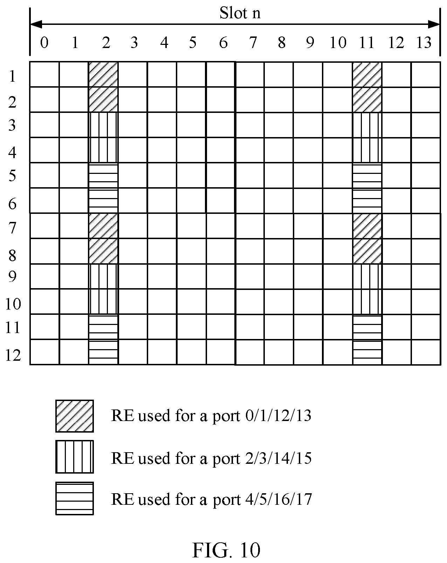

FIG. 10 shows a time-frequency resource mapping method in the case 3. As shown in FIG. 10, six ports may be newly added on a basis of existing six ports (that is, a port 0 to a port 5), and port indexes of the six newly added ports may be 12 to 17. Both the existing ports and the newly added ports may be mapped to REs corresponding to a symbol 2 (that is, a front-loaded symbol) and a symbol 11 (that is, an additional DMRS symbol).

The following uses the port 0, the port 1, the port 12, and the port 13 as examples to describe how to distinguish between the DMRSs corresponding to the ports.

A first port set includes the port 0 and the port 1, and a second port set includes the port 12 and the port 13. Transmission of a DMRS corresponding to the first port set and a DMRS corresponding to the second port set may be performed by using a same resource. For the case 3, the DMRSs corresponding to the ports may be distinguished in a manner similar to any one of the manner A1 to the manner A5. The following specifically describes some of manners.

Manner C1: The DMRSs corresponding to the ports are distinguished by using TD-OCCs.

The manner C1 is similar to the manner A1. A port in the first port set and a port in the second port set correspond to different time domain OCCs.

Table 12A shows an example of cover code elements that correspond to DMRS sequences corresponding to the ports and that are on resources in the manner C1. As shown in Table 12A, for the existing port 0 and port 1, DMRS sequences corresponding to the port 0 and the port 1 do not change, and correspond to a time domain OCC {+1, +1} on the symbol 2 and the symbol 11 respectively. For the newly added port 12, a DMRS sequence corresponding to the port 12 is the same as that corresponds to the existing port 0 on the symbol 2, and corresponds to a time domain OCC {+1, -1} on the symbol 2 and the symbol 11 respectively. For the newly added port 13, a DMRS sequence corresponding to the port 13 is the same as that corresponds to the existing port 1 on the symbol 2, and corresponds to a time domain OCC {+1, -1} on the symbol 2 and the symbol 11 respectively. In this way, a DMRS corresponding to the newly added port and a DMRS corresponding to the existing port may be distinguished by using time domain OCCs with a length of 2, to implement code domain orthogonality. In the manner, a quantity of DMRS ports may be increased.

**Table 12A**

| | Symbol 2 | | | | Symbol 11 | | | |
|---|---|---|---|---|---|---|---|---|
| | Port 0 | Port 1 | Port 12 | Port 13 | Port 0 | Port 1 | Port 12 | Port 13 |
| Subcarrier 1 | 1 | 1 | 1 | 1 | 1 | 1 | -1 | -1 |
| Subcarrier 2 | 1 | -1 | 1 | -1 | 1 | -1 | -1 | 1 |
| Subcarrier 7 | 1 | 1 | 1 | 1 | 1 | 1 | -1 | -1 |
| Subcarrier 8 | 1 | -1 | 1 | -1 | 1 | -1 | -1 | 1 |

In the manner C1, for the port 2, the port 3, the port 14, and the port 15, the DMRSs corresponding to the ports may also be distinguished in a manner similar to that of the port 0, the port 1, the port 12, and the port 13. For example, cover code elements that correspond to DMRS sequences corresponding to the ports and that are on resources may be shown in Table 12B.

**Table 12B**

| | Symbol 2 | | | | Symbol 11 | | | |
|---|---|---|---|---|---|---|---|---|
| | Port 2 | Port 3 | Port 14 | Port 15 | Port 2 | Port 3 | Port 14 | Port 15 |
| Subcarrier 3 | 1 | 1 | 1 | 1 | 1 | 1 | -1 | -1 |
| Subcarrier 4 | 1 | -1 | 1 | -1 | 1 | -1 | -1 | 1 |
| Subcarrier 9 | 1 | 1 | 1 | 1 | 1 | 1 | -1 | -1 |
| Subcarrier 10 | 1 | -1 | 1 | -1 | 1 | -1 | -1 | 1 |

In the manner C1, for the port 4, the port 5, the port 16, and the port 17, the DMRSs corresponding to the ports may also be distinguished in a manner similar to that of the port 0, the port 1, the port 12, and the port 13. For example, cover code elements that correspond to DMRS sequences corresponding to the ports and that are on resources may be shown in Table 12C.

**Table 12C**

| | Symbol 2 | | | | Symbol 11 | | | |
|---|---|---|---|---|---|---|---|---|
| | Port 4 | Port 5 | Port 16 | Port 17 | Port 4 | Port 5 | Port 16 | Port 17 |
| Subcarrier 5 | 1 | 1 | 1 | 1 | 1 | 1 | -1 | -1 |
| Subcarrier 6 | 1 | -1 | 1 | -1 | 1 | -1 | -1 | 1 |
| Subcarrier 11 | 1 | 1 | 1 | 1 | 1 | 1 | -1 | -1 |
| Subcarrier 12 | 1 | -1 | 1 | -1 | 1 | -1 | -1 | 1 |

Manner C2: The DMRSs corresponding to the ports are distinguished by using FD-OCCs and TD-OCCs.

The manner C2 is similar to the manner A3. A port in the first port set and a port in the second port set correspond to different time domain OCCs, and the port in the first port set and the port in the second port set correspond to different frequency domain OCCs.

Table 13A shows an example of cover code elements that correspond to DMRS sequences corresponding to the ports and that are on resources in the manner C2. As shown in Table 13A, in the symbol 2, the existing port 0 corresponds to a frequency domain OCC {+1, +1, +1, +1} on a subcarrier 1, a subcarrier 2, a subcarrier 7, and a subcarrier 8 respectively; the existing port 1 corresponds to a frequency domain OCC {+1, -1, +1, -1} on the subcarrier 1, the subcarrier 2, the subcarrier 7, and the subcarrier 8 respectively; the newly added port 12 corresponds to a frequency domain OCC {+1, +1, -1, -1} on the subcarrier 1, the subcarrier 2, the subcarrier 7, and the subcarrier 8 respectively; and the newly added port 13 corresponds to a frequency domain OCC {+1, -1, -1, +1} on the subcarrier 1, the subcarrier 2, the subcarrier 7, and the subcarrier 8 respectively.

The existing port 0 corresponds to a time domain OCC {+1, +1} on the symbol 2 and the symbol 11 respectively. The existing port 1 corresponds to a time domain OCC {+1, +1} on the symbol 2 and the symbol 11 respectively. The newly added port 12 corresponds to a time domain OCC {+1, -1} on the symbol 2 and the symbol 11 respectively. The newly added port 13 corresponds to a time domain OCC {+1, -1} on the symbol 2 and the symbol 11 respectively.

In this way, a DMRS corresponding to the newly added port and a DMRS corresponding to the existing port may be distinguished by using frequency domain OCCs with a length of 4 and time domain OCCs with a length of 2, to implement code domain orthogonality.

**Table 13A**

| | Symbol 2 | | | | Symbol 11 | | | |
|---|---|---|---|---|---|---|---|---|
| | Port 0 | Port 1 | Port 12 | Port 13 | Port 0 | Port 1 | Port 12 | Port 13 |
| Subcarrier 1 | 1 | 1 | 1 | 1 | 1 | 1 | -1 | -1 |
| Subcarrier 2 | 1 | -1 | 1 | -1 | 1 | -1 | -1 | 1 |
| Subcarrier 7 | 1 | 1 | -1 | -1 | 1 | 1 | 1 | 1 |
| Subcarrier 8 | 1 | -1 | -1 | 1 | 1 | -1 | 1 | -1 |

In the manner C2, for the port 2, the port 3, the port 14, and the port 15, the DMRSs corresponding to the ports may also be distinguished in a manner similar to that of the port 0, the port 1, the port 12, and the port 13. For example, cover code elements that correspond to DMRS sequences corresponding to the ports and that are on resources may be shown in Table 13B.

**Table 13B**

| | Symbol 2 | | | | Symbol 11 | | | |
|---|---|---|---|---|---|---|---|---|
| | Port 2 | Port 3 | Port 14 | Port 15 | Port 2 | Port 3 | Port 14 | Port 15 |
| Subcarrier 3 | 1 | 1 | 1 | 1 | 1 | 1 | -1 | -1 |
| Subcarrier 4 | 1 | -1 | 1 | -1 | 1 | -1 | -1 | 1 |
| Subcarrier 9 | 1 | 1 | -1 | -1 | 1 | 1 | 1 | 1 |
| Subcarrier 10 | 1 | -1 | -1 | 1 | 1 | -1 | 1 | -1 |

In the manner C2, for the port 4, the port 5, the port 16, and the port 17, the DMRSs corresponding to the ports may also be distinguished in a manner similar to that of the port 0, the port 1, the port 12, and the port 13. For example, cover code elements that correspond to DMRS sequences corresponding to the ports and that are on resources may be shown in Table 13C.

**Table 13C**

| | Symbol 2 | | | | Symbol 11 | | | |
|---|---|---|---|---|---|---|---|---|
| | Port 4 | Port 5 | Port 16 | Port 17 | Port 4 | Port 5 | Port 16 | Port 17 |
| Subcarrier 5 | 1 | 1 | 1 | 1 | 1 | 1 | -1 | -1 |
| Subcarrier 6 | 1 | -1 | 1 | -1 | 1 | -1 | -1 | 1 |
| Subcarrier 11 | 1 | 1 | -1 | -1 | 1 | 1 | 1 | 1 |
| Subcarrier 12 | 1 | -1 | -1 | 1 | 1 | -1 | 1 | -1 |

Case 4: One group of additional DMRS symbols are added on a basis of a front-loaded double-symbol Type 2 DMRS.

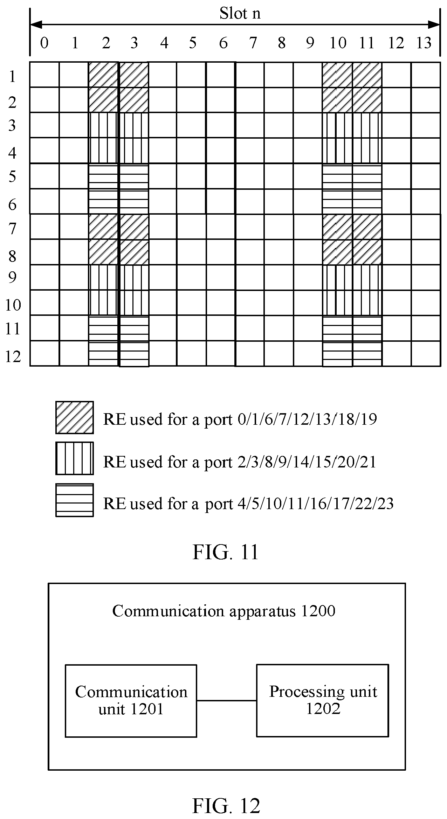

FIG. 11 shows a time-frequency resource mapping method in the case 4. As shown in FIG. 11, twelve ports may be newly added on a basis of existing twelve ports (that is, a port 0 to a port 11), and port indexes of the twelve newly added ports may be 12 to 23. Both the existing ports and the newly added ports may be mapped to REs corresponding to a symbol 2, a symbol 3, a symbol 10, and a symbol 11, where the symbol 2 and the symbol 3 are front-loaded symbols, and the symbol 10 and the symbol 11 are additional DMRS symbols.

The following uses the port 0, the port 1, the port 6, the port 7, the port 12, the port 13, the port 18, and the port 19 as examples to describe how to implement orthogonality between a DMRS corresponding to the existing port and a DMRS corresponding to the newly added port.

A first port set includes the port 0, the port 1, the port 6, and the port 7, and a second port set includes the port 12, the port 13, the port 18, and the port 19. Transmission of a DMRS corresponding to the first port set and a DMRS corresponding to the second port set may be performed by using a same resource. For the case 4, the DMRSs corresponding to the ports may be distinguished in a manner similar to any one of the manner A1 to the manner A5. The following specifically describes some of manners.

Manner D1: The DMRSs corresponding to the ports are distinguished by using TD-OCCs.

The manner D1 is similar to the manner A1. A port in the first port set and a port in the second port set correspond to different time domain OCCs. For example, for the existing port 0, port 1, port 6, and port 7, DMRS sequences corresponding to the port 0, the port 1, the port 6, and the port 7 do not change, and correspond to a time domain OCC {+1, +1} on a front-loaded symbol and an additional DMRS symbol respectively. For the newly added port 12, port 13, port 18, and port 19, DMRS sequences corresponding to the port 12, the port 13, the port 18, and the port 19 are respectively the same as those correspond to the existing port 0, port 1, port 6, and port 7 on the front-loaded symbol, and correspond to a time domain OCC {+1, -1} on the front-loaded symbol and the additional DMRS symbol respectively. In this way, code division multiplexing may be performed between the DMRS corresponding to the newly added port and the DMRS corresponding to the existing port, to implement code domain orthogonality.

Manner D2: The DMRSs corresponding to the ports are distinguished by using FD-OCCs and TD-OCCs.

The manner D2 is similar to the manner A3. A port in the first port set and a port in the second port set correspond to different time domain OCCs, and the port in the first port set and the port in the second port set correspond to different frequency domain OCCs.

Table 14A shows an example of cover code elements that correspond to DMRS sequences corresponding to the ports and that are on resources in the manner D2. As shown in Table 14A, in the symbol 2, the existing port 0 corresponds to a frequency domain OCC {+1, +1} on a subcarrier 1 and a subcarrier 2 respectively; the existing port 1 corresponds to a frequency domain OCC {+1, -1} on the subcarrier 1 and the subcarrier 2 respectively; the existing port 6 corresponds to a frequency domain OCC {+1, +1} on the subcarrier 1 and the subcarrier 2 respectively; the existing port 7 corresponds to a frequency domain OCC {+1, -1} on the subcarrier 1 and the subcarrier 2 respectively; the newly added port 12 corresponds to a frequency domain OCC {+1, +1} on the subcarrier 1 and the subcarrier 2 respectively; the newly added port 13 corresponds to a frequency domain OCC {+1, -1} on the subcarrier 1 and the subcarrier 2 respectively; the newly added port 18 corresponds to a frequency domain OCC {+1, +1} on the subcarrier 1 and the subcarrier 2 respectively; and the newly added port 19 corresponds to a frequency domain OCC {+1, -1} on the subcarrier 1 and the subcarrier 2 respectively.

The existing port 0 corresponds to a time domain OCC {+1, +1, +1, +1} on the symbol 2, the symbol 3, the symbol 10, and the symbol 11 respectively. The existing port 1 corresponds to a time domain OCC {+1, +1, +1, +1} on the symbol 2, the symbol 3, the symbol 10, and the symbol 11 respectively. The existing port 6 corresponds to a time domain OCC {+1, -1, +1, -1} on the symbol 2, the symbol 3, the symbol 10, and the symbol 11 respectively. The existing port 7 corresponds to a time domain OCC {+1, -1, +1, -1} on the symbol 2, the symbol 3, the symbol 10, and the symbol 11 respectively. The newly added port 12 corresponds to a time domain OCC {+1, +1, -1, -1} on the symbol 2, the symbol 3, the symbol 10, and the symbol 11 respectively. The newly added port 13 corresponds to a time domain OCC {+1, +1, -1, -1} on the symbol 2, the symbol 3, the symbol 10, and the symbol 11 respectively. The newly added port 18 corresponds to a time domain OCC {+1, -1, -1, +1} on the symbol 2, the symbol 3, the symbol 10, and the symbol 11 respectively. The newly added port 19 corresponds to a time domain OCC {+1, -1, -1, +1} on the symbol 2, the symbol 3, the symbol 10, and the symbol 11 respectively.

In this way, the DMRS corresponding to the newly added port and the DMRS corresponding to the existing port may be distinguished by using frequency domain OCCs with a length of 2 and time domain OCCs with a length of 4, to implement code domain orthogonality.

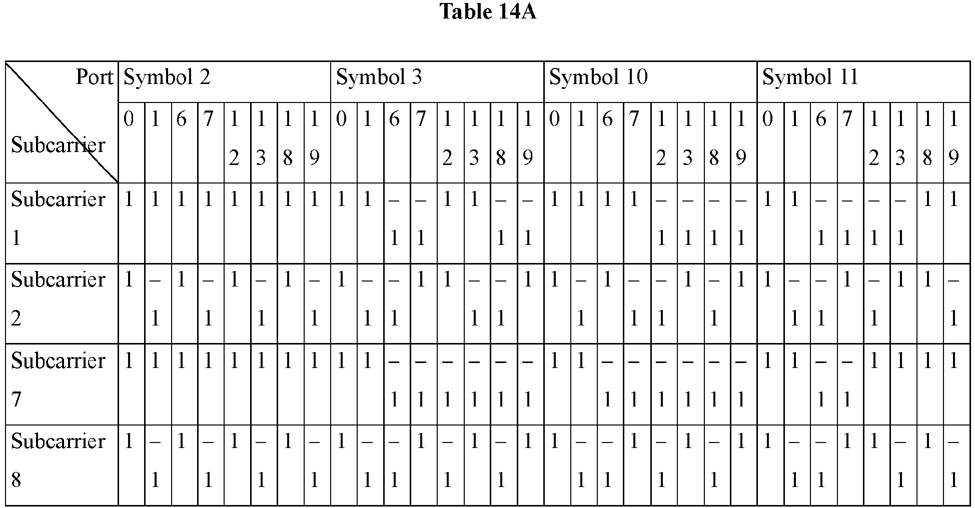

In addition, for the port 2, the port 3, the port 8, the port 9, the port 14, the port 15, the port 20, and the port 21, the DMRSs corresponding to the ports may also be distinguished in a manner similar to that of the port 0, the port 1, the port 6, the port 7, the port 12, the port 13, the port 18, and the port 19. For example, cover code elements that correspond to DMRS sequences corresponding to the ports and that are on resources may be shown in Table 14B.

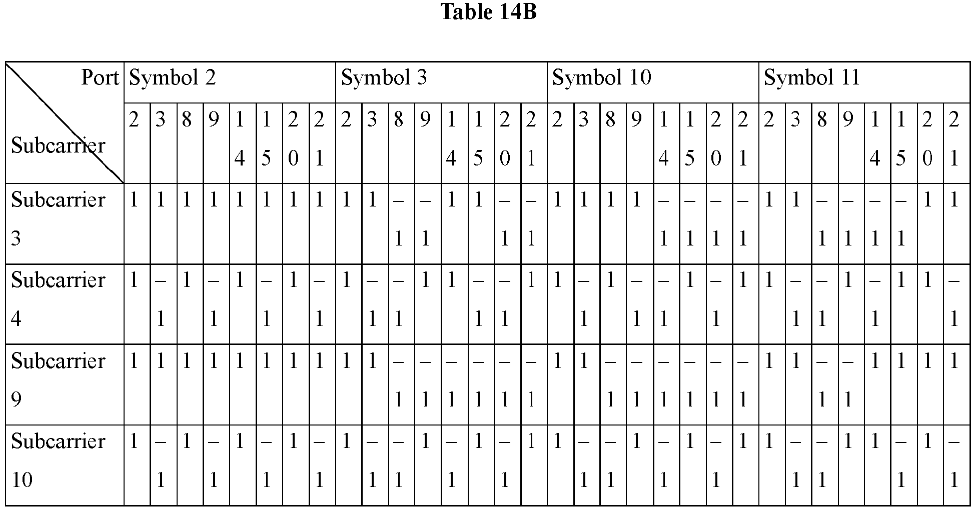

In addition, for the port 4, the port 5, the port 10, the port 11, the port 16, the port 17, the port 22, and the port 23, the DMRSs corresponding to the ports may also be distinguished in a manner similar to that of the port 0, the port 1, the port 6, the port 7, the port 12, the port 13, the port 18, and the port 19. For example, cover code elements that correspond to DMRS sequences corresponding to the ports and that are on resources may be shown in Table 14C.

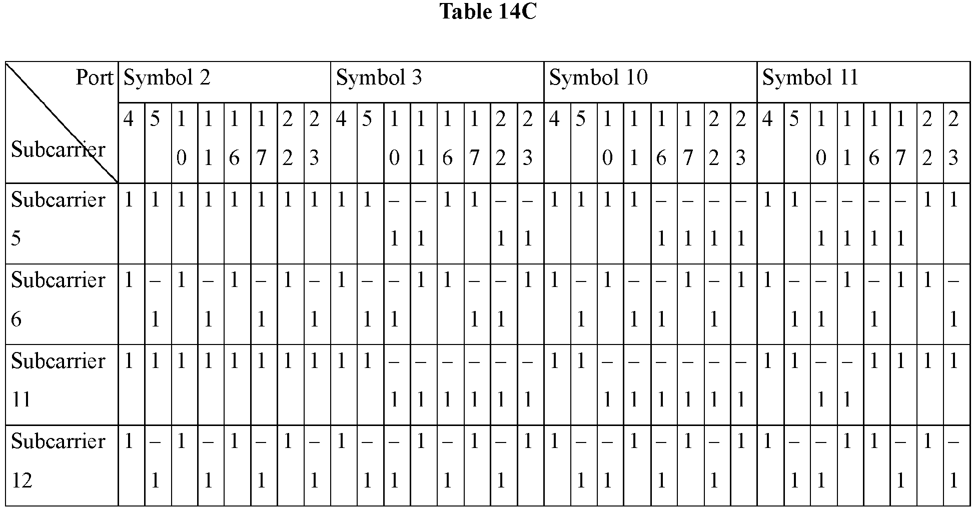

Table 15A shows another example of cover code elements that correspond to DMRS sequences corresponding to the ports and that are on resources in the manner D2. As shown in Table 15A, in the symbol 2, the existing port 0 corresponds to a frequency domain OCC {+1, +1, +1, +1} on a subcarrier 1, a subcarrier 2, a subcarrier 7, and a subcarrier 8 respectively; the existing port 1 corresponds to a frequency domain OCC {+1, -1, +1, -1} on the subcarrier 1, the subcarrier 2, the subcarrier 7, and the subcarrier 8 respectively; the existing port 6 corresponds to a frequency domain OCC {+1, +1, +1, +1} on the subcarrier 1, the subcarrier 2, the subcarrier 7, and the subcarrier 8 respectively; the existing port 7 corresponds to a frequency domain OCC {+1, -1, +1, -1} on the subcarrier 1, the subcarrier 2, the subcarrier 7, and the subcarrier 8 respectively; the newly added port 12 corresponds to a frequency domain OCC {+1, +1, -1, -1} on the subcarrier 1, the subcarrier 2, the subcarrier 7, and the subcarrier 8 respectively; the newly added port 13 corresponds to a frequency domain OCC {+1, -1, -1, +1} on the subcarrier 1, the subcarrier 2, the subcarrier 7, and the subcarrier 8 respectively; the newly added port 18 corresponds to a frequency domain OCC {+1, +1, -1, -1} on the subcarrier 1, the subcarrier 2, the subcarrier 7, and the subcarrier 8 respectively; and the newly added port 19 corresponds to a frequency domain OCC {+1, -1, -1, +1} on the subcarrier 1, the subcarrier 2, the subcarrier 7, and the subcarrier 8 respectively.

The existing port 0 corresponds to a time domain OCC {+1, +1, +1, +1} on the symbol 2, the symbol 3, the symbol 10, and the symbol 11 respectively. The existing port 1 corresponds to a time domain OCC {+1, +1, +1, +1} on the symbol 2, the symbol 3, the symbol 10, and the symbol 11 respectively. The existing port 6 corresponds to a time domain OCC {+1, -1, +1, -1} on the symbol 2, the symbol 3, the symbol 10, and the symbol 11 respectively. The existing port 7 corresponds to a time domain OCC {+1, -1, +1, -1} on the symbol 2, the symbol 3, the symbol 10, and the symbol 11 respectively. The newly added port 12 corresponds to a time domain OCC {+1, +1, -1, -1} on the symbol 2, the symbol 3, the symbol 10, and the symbol 11 respectively. The newly added port 13 corresponds to a time domain OCC {+1, +1, -1, -1} on the symbol 2, the symbol 3, the symbol 10, and the symbol 11 respectively. The newly added port 18 corresponds to a time domain OCC {+1, -1, -1, +1} on the symbol 2, the symbol 3, the symbol 10, and the symbol 11 respectively. The newly added port 19 corresponds to a time domain OCC {+1, -1, -1, +1} on the symbol 2, the symbol 3, the symbol 10, and the symbol 11 respectively.

In this way, the DMRS corresponding to the newly added port and the DMRS corresponding to the existing port may be distinguished by using frequency domain OCCs with a length of 4 and time domain OCCs with a length of 4, to implement code domain orthogonality.

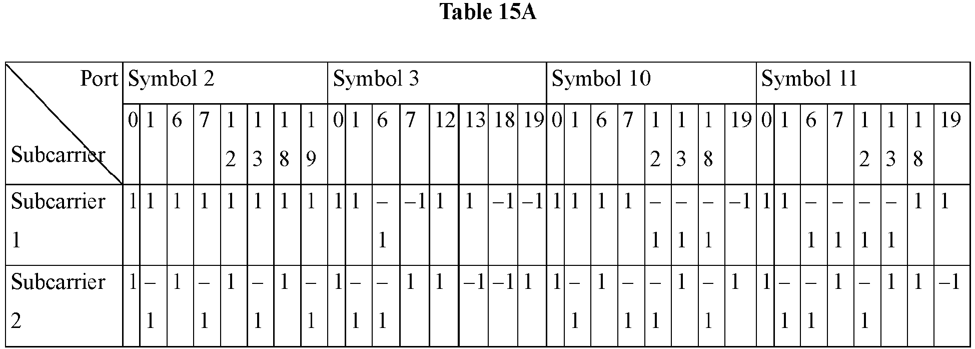

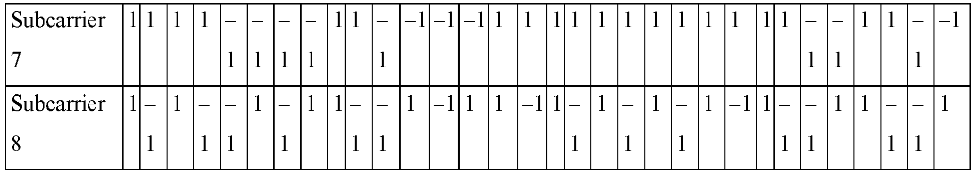

In addition, for the port 2, the port 3, the port 8, the port 9, the port 14, the port 15, the port 20, and the port 21, the DMRSs corresponding to the ports may also be distinguished in a manner similar to that of the port 0, the port 1, the port 6, the port 7, the port 12, the port 13, the port 18, and the port 19. For example, cover code elements that correspond to DMRS sequences corresponding to the ports and that are on resources may be shown in Table 15B.

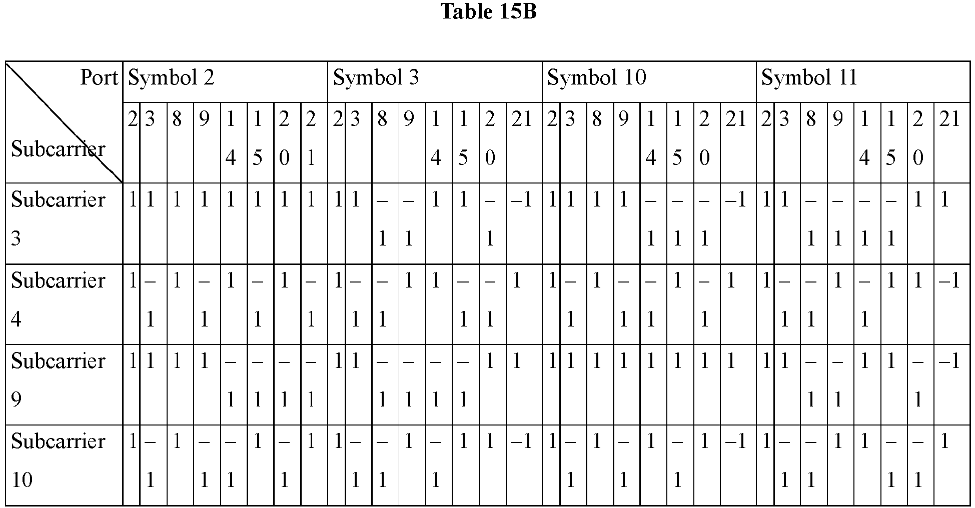

In addition, for the port 4, the port 5, the port 10, the port 11, the port 16, the port 17, the port 22, and the port 23, the DMRSs corresponding to the ports may also be distinguished in a manner similar to that of the port 0, the port 1, the port 6, the port 7, the port 12, the port 13, the port 18, and the port 19. For example, cover code elements that correspond to DMRS sequences corresponding to the ports and that are on resources may be shown in Table 15C.

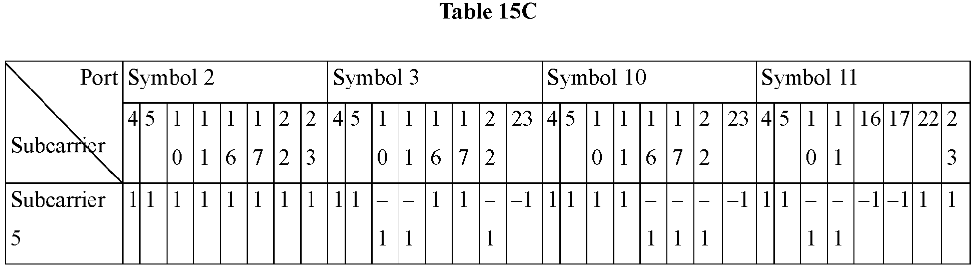

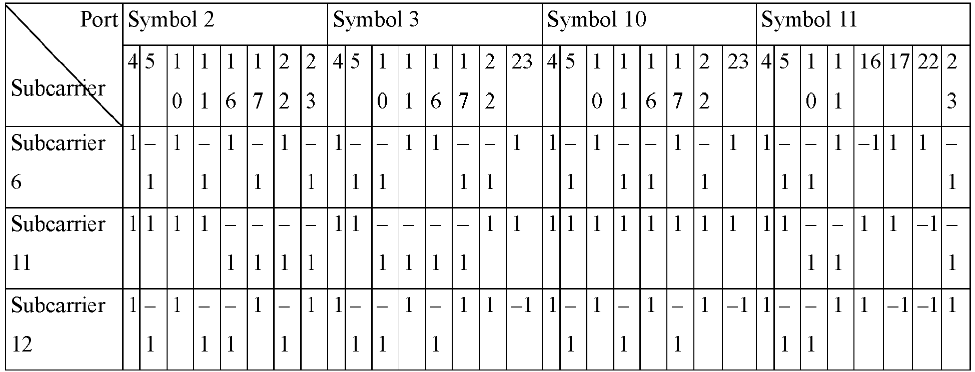

It should be understood that, in the case 1 and the case 3, that the front-loaded symbol is the symbol 2, and the additional DMRS symbol is the symbol 11 is merely an example. The front-loaded symbol and the additional DMRS symbol may be other symbols shown in Table 3. For example, the front-loaded symbol is the symbol 2, and the additional DMRS symbol is a symbol 9. In the case 2 and the case 4, that the front-loaded symbols are the symbol 2 and the symbol 3, and the additional DMRS symbols are the symbol 10 and the symbol 11 is merely an example. The front-loaded symbol and the additional DMRS symbol may be other symbols shown in Table 4. For example, the front-loaded symbols are the symbol 2 and the symbol 3, and the additional DMRS symbols are a symbol 12 and a symbol 13.

In the manners in the case 1 to the case 4, after the additional DMRS symbol is newly added, the quantity of DMRS ports may be increased to at least twice that when no additional DMRS symbol is newly added.

It should be noted that embodiments are described by using an example in which one group of additional DMRS symbols are newly added. For a case in which a plurality of groups of additional DMRS symbols are newly added, the quantity of DMRS ports may also be increased in a similar manner (for example, a TD-OCC code division group is expanded). For example, in the manner A1, DMRSs whose transmission is performed by using one group of front-loaded symbols and one group of additional DMRS symbols may be distinguished by using TD-OCCs with a length of 2. In a similar manner, DMRSs whose transmission is performed by using one group of front-loaded symbols and three groups of additional DMRS symbols may be distinguished by using TD-OCCs with a length of 4.

Based on a same inventive concept as the method embodiment in FIG. 7, an embodiment of this application provides a communication apparatus shown in FIG. 12, and the communication apparatus may be configured to perform functions of related steps in the foregoing method embodiment. The functions may be implemented by hardware, or may be implemented by software or by hardware executing corresponding software. The hardware or the software includes one or more modules corresponding to the foregoing functions. A structure of the communication apparatus is shown in FIG. 12, and includes a communication unit 1201 and a processing unit 1202. The communication apparatus 1200 may be used in the network device or the terminal device in the communication system shown in FIG. 1, and may implement the communication method provided in the foregoing embodiments and examples of this application. The following describes functions of the units in the communication apparatus 1200.

The communication unit 1201 is configured to receive and send data.

The communication unit 1201 may be implemented by using a transceiver, for example, a mobile communication module. The mobile communication module may include at least one antenna, at least one filter, a switch, a power amplifier, a low noise amplifier (low noise amplifier, LNA), and the like. The AN device may communicate with an accessed terminal device via the mobile communication module.

The processing unit 1202 may be configured to support the communication apparatus 1200 in performing a processing action in the foregoing method embodiment. The processing unit 1202 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an implementation, the communication apparatus 1200 is used in the sending device in the embodiment of this application shown in FIG. 7. The following describes a specific function of the processing unit 1202 in the implementation.

The processing unit 1202 is configured to:
obtain a reference signal corresponding to a first port; and
send the reference signal via the communication unit 1201 by using a first resource and a second resource, where the first port belongs to a first port set or a second port set, the first resource is on a first orthogonal frequency division multiplexing OFDM symbol, the second resource is on a second OFDM symbol, and the first OFDM symbol is not adjacent to the second OFDM symbol.

A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code.

Optionally, the first OFDM symbol is a front-loaded demodulation reference signal DMRS symbol, and the second OFDM symbol is an additional DMRS symbol.

Optionally, the processing unit 1202 is specifically configured to: before sending the reference signal by using the first resource and the second resource, receive first indication information from a network device via the communication unit 1201, where the first indication information indicates to send, in a first manner, the reference signal corresponding to the first port, and the first manner is sending the reference signal of the first port by using the first resource and the second resource.

Optionally, the first indication information includes a first port index, and the first port index indicates the first manner.

Optionally, the processing unit 1202 is specifically configured to:
receive second indication information from the network device via the communication unit 1201, where the second indication information indicates to send, in a second manner, the reference signal corresponding to the first port, the second manner is sending the reference signal of the first port by using a third resource and a fourth resource, the third resource and the fourth resource are on different frequency domain resources, the reference signal corresponding to the port in the first port set corresponds to a third cover code on the third resource and the fourth resource, the reference signal corresponding to the port in the second port set corresponds to a fourth cover code on the third resource and the fourth resource, and the third cover code is different from the fourth cover code; and
send, via the communication unit 1201 by using the third resource and the fourth resource, the reference signal corresponding to the first port.

Optionally, the second indication information includes a second port index, and the second port index indicates the second manner.

Optionally, the processing unit 1202 is specifically configured to:
receive third indication information from the network device via the communication unit 1201, where the third indication information indicates to send, in a third manner, the reference signal corresponding to the first port; the third manner is: when the first port belongs to the first port set, sending, by using a fifth resource, the reference signal corresponding to the first port; or when the first port belongs to the second port set, sending, by using a sixth resource, the reference signal corresponding to the first port; and the fifth resource and the sixth resource are on different frequency domain resources; and
send, via the communication unit 1201 by using the fifth resource or the sixth resource, the reference signal corresponding to the first port.

Optionally, the third indication information includes a third port index, and the third port index indicates the third manner.

Optionally, elements in a sequence of the reference signal corresponding to the first port are in one-to-one correspondence with resource elements REs in the first resource, and the elements in the sequence of the reference signal corresponding to the first port are in one-to-one correspondence with REs in the second resource.

Optionally, a quantity of the elements included in the sequence of the reference signal corresponding to the first port is one of the following: 2, 4, 6, 8, and 12.

In an implementation, the communication apparatus 1200 is used in the receiving device in the embodiment of this application shown in FIG. 7. The following describes a specific function of the processing unit 1202 in the implementation.

The processing unit 1202 is configured to:
receive, via the communication unit 1201 by using a first resource and a second resource, a reference signal corresponding to a first port, where the first port belongs to a first port set or a second port set, the first resource is on a first orthogonal frequency division multiplexing OFDM symbol, the second resource is on a second OFDM symbol, and the first OFDM symbol is not adjacent to the second OFDM symbol.

A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code.

Optionally, the first OFDM symbol is a front-loaded demodulation reference signal DMRS symbol, and the second OFDM symbol is an additional DMRS symbol.

Optionally, the processing unit 1202 is specifically configured to: before receiving, by using the first resource and the second resource, the reference signal corresponding to the first port, send first indication information via the communication unit 1201, where the first indication information indicates to send, in a first manner, the reference signal corresponding to the first port, and the first manner is sending the reference signal of the first port by using the first resource and the second resource.

Optionally, the first indication information includes a first port index, and the first port index indicates the first manner.

Optionally, the processing unit 1202 is specifically configured to:
send second indication information via the communication unit 1201, where the second indication information indicates to send, in a second manner, the reference signal corresponding to the first port, the second manner is sending the reference signal of the first port by using a third resource and a fourth resource, the third resource and the fourth resource are on different frequency domain resources, the reference signal corresponding to the port in the first port set corresponds to a third cover code on the third resource and the fourth resource, the reference signal corresponding to the port in the second port set corresponds to a fourth cover code on the third resource and the fourth resource, and the third cover code is different from the fourth cover code; and
receive, via the communication unit 1201 by using the third resource and the fourth resource, the reference signal corresponding to the first port.

Optionally, the second indication information includes a second port index, and the second port index indicates the second manner.

Optionally, the processing unit 1202 is specifically configured to:
send third indication information via the communication unit 1201, where the third indication information indicates to send, in a third manner, the reference signal corresponding to the first port; the third manner is: when the first port belongs to the first port set, sending, by using a fifth resource, the reference signal corresponding to the first port; or when the first port belongs to the second port set, sending, by using a sixth resource, the reference signal corresponding to the first port; and the fifth resource and the sixth resource are on different frequency domain resources; and
receive, via the communication unit 1201 by using the fifth resource or the sixth resource, the reference signal corresponding to the first port.

Optionally, the third indication information includes a third port index, and the third port index indicates the third manner.

Optionally, elements in a sequence of the reference signal corresponding to the first port are in one-to-one correspondence with resource elements REs in the first resource, and the elements in the sequence of the reference signal corresponding to the first port are in one-to-one correspondence with REs in the second resource.

Optionally, a quantity of the elements included in the sequence of the reference signal corresponding to the first port is one of the following: 2, 4, 6, 8, and 12.

It should be noted that, in the foregoing embodiments of this application, division into the modules is an example, is merely logical function division, and may be other division in actual implementation. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

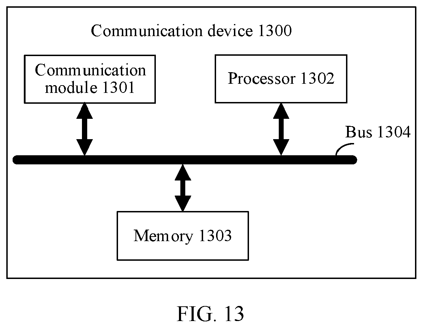

Based on a same technical concept, an embodiment of this application provides a communication device shown in FIG. 13, and the communication device may be configured to perform related steps in the foregoing method embodiment. The communication device may be used in the network device or the terminal device in the communication system shown in FIG. 1, may implement the communication method provided in the foregoing embodiments and examples of this application, and has functions of the communication apparatus shown in FIG. 12. Refer to FIG. 13. The communication device 1300 includes a communication module 1301, a processor 1302, and a memory 1303. The communication module 1301, the processor 1302, and the memory 1303 are connected to each other.

Optionally, the communication module 1301, the processor 1302, and the memory 1303 are connected to each other through a bus 1304. The bus 1304 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

The communication module 1301 is configured to receive and send data, to implement communication interaction with another device. For example, the communication module 1301 may be implemented by a physical interface, a communication module, a communication interface, or an input/output interface.

The processor 1302 may be configured to support the communication device 1300 in performing a processing action in the foregoing method embodiment. When the communication device 1300 is configured to implement the foregoing method embodiment, the processor 1302 may be further configured to implement a function of the foregoing processing unit 1202. The processor 1302 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor.

In an implementation, the communication device 1300 is used in the sending device in the embodiment of this application shown in FIG. 7. The processor 1302 is specifically configured to:
obtain a reference signal corresponding to a first port; and
send the reference signal via the communication module 1301 by using a first resource and a second resource, where the first port belongs to a first port set or a second port set, the first resource is on a first orthogonal frequency division multiplexing OFDM symbol, the second resource is on a second OFDM symbol, and the first OFDM symbol is not adjacent to the second OFDM symbol.

A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code.

In an implementation, the communication device 1300 is used in the receiving device in the embodiment of this application shown in FIG. 7. The processor 1302 is specifically configured to:
receive, via the communication module 1301 by using a first resource and a second resource, a reference signal corresponding to a first port, where the first port belongs to a first port set or a second port set, the first resource is on a first orthogonal frequency division multiplexing OFDM symbol, the second resource is on a second OFDM symbol, and the first OFDM symbol is not adjacent to the second OFDM symbol.

A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code.

For a specific function of the processor 1302, refer to the descriptions in the communication method provided in the foregoing embodiments and examples of this application, and the specific function descriptions of the communication apparatus 1200 in the embodiment of this application shown in FIG. 12. Details are not described herein again.

The memory 1303 is configured to store program instructions, data, and the like. Specifically, the program instructions may include program code, and the program code includes computer operation instructions. The memory 1303 may include a RAM, or may include a non-volatile memory (non-volatile memory), for example, at least one magnetic disk storage. The processor 1302 executes the program instructions stored in the memory 1303, and implements the foregoing functions by using the data stored in the memory 1303, to implement the communication method provided in the foregoing embodiments of this application.

It may be understood that the memory 1303 in FIG. 13 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be the RAM, and serves as an external cache. By way of example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include but is not limited to these memories and any memory of another appropriate type.

According to the foregoing embodiments, an embodiment of this application further provides a computer program. When the computer program is run on a computer, the computer is enabled to perform the method provided in the foregoing embodiment.

According to the foregoing embodiments, an embodiment of this application further provides a computer-readable storage medium. The computer-readable storage medium stores a computer program. When the computer program is executed by a computer, the computer is enabled to perform the method provided in the foregoing embodiment.

The storage medium may be any usable medium that can be accessed by the computer. The following provides an example but does not impose a limitation: The computer-readable medium may include a RAM, a ROM, an EEPROM, a CD-ROM or another optical disc storage, a disk storage medium or another disk storage device, or any other medium that can be used to carry or store expected program code in a form of an instruction or a data structure and that can be accessed by the computer.

According to the foregoing embodiments, an embodiment of this application further provides a chip. The chip is configured to read a computer program stored in a memory, to implement the method provided in the foregoing embodiment.

According to the foregoing embodiments, an embodiment of this application provides a chip system. The chip system includes a processor, configured to support a computer apparatus in implementing functions of the devices in the foregoing embodiments. In a possible design, the chip system further includes a memory, and the memory is configured to store a program and data that are necessary for the computer apparatus. The chip system may include a chip, or may include a chip and another discrete device.

In conclusion, embodiments of this application provide a communication method and apparatus, and a device. In the method, after obtaining a reference signal corresponding to a first port, a sending device may send the reference signal by using a first resource and a second resource. The first port belongs to a first port set or a second port set, the first resource is on a first OFDM symbol, the second resource is on a second OFDM symbol, and the first OFDM symbol is not adjacent to the second OFDM symbol. A reference signal corresponding to a port in the first port set corresponds to a first cover code on the first resource and the second resource, a reference signal corresponding to a port in the second port set corresponds to a second cover code on the first resource and the second resource, and the first cover code is different from the second cover code. According to the solution, the sending device may transmit the reference signal by using resources on a plurality of non-adjacent OFDM symbols. In addition, the reference signal corresponding to the port in the first port set corresponds to the first cover code on the resources on the plurality of OFDM symbols, the reference signal corresponding to the port in the first port set corresponds to the second cover code on the resources on the plurality of OFDM symbols, and the first cover code is different from the second cover code. Therefore, a quantity of ports may be expanded by using the plurality of non-adjacent OFDM symbols, to support a larger quantity of transport streams.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. Therefore, this application is intended to cover these modifications and variations of this application if they fall within the scope of the claims of this application.

## Claims

1. A communication method performed by a terminal device, comprising:
obtaining (S701) a reference signal corresponding to a first port;
receiving first indication information, from a network device, wherein when the first indication information is a first value it indicates to the terminal device to send the reference signal in a first manner and when the first indication information is a second value it indicates to the terminal device to send the reference signal in a second manner, wherein the first manner is sending the reference signal of the first port by using a first resource and a second resource, wherein the first resource and/or the second resource is on an edge sub-band, wherein the second manner is sending the reference signal of the first port by using a third resource and a fourth resource, and wherein the third resource and/or the fourth resource is on a non-edge sub-band; and
sending (S702), to the network device, the reference signal by using the first resource and the second resource or by using the third resource and the fourth resource,
wherein the first port belongs to a first port set or a second port set, the first resource is on a first orthogonal frequency division multiplexing OFDM symbol, the second resource is on a second OFDM symbol, the first OFDM symbol is not adjacent to the second OFDM symbol, a reference signal corresponding to a port in the first port set corresponds to a first cover code on the first resource and the second resource, a reference signal corresponding to a port in the second port set corresponds to a second cover code on the first resource and the second resource, and the first cover code is different from the second cover code,
wherein the third resource and the fourth resource are on different frequency domain resources, the reference signal corresponding to the port in the first port set corresponds to a third cover code on the third resource and the fourth resource, the reference signal corresponding to the port in the second port set corresponds to a fourth cover code on the third resource and the fourth resource, the third cover code is different from the fourth cover code, and
wherein the first OFDM symbol is a front-loaded demodulation reference signal DMRS symbol, and the second OFDM symbol is an additional DMRS symbol.

2. The method according to claim 1, wherein the first indication information comprises a first port index, and the first port index indicates the first manner.

3. The method according to claim 1, wherein the first indication information comprises a second port index, and the second port index indicates the second manner.

4. A communication method performed by a network device, comprising:
sending first indication information, to a terminal device, wherein when the first indication information is a first value it indicates to the terminal device to send a reference signal in a first manner and when the first indication information is a second value it indicates to the terminal device to send the reference signal in a second manner, wherein the first manner is sending the reference signal of the first port by using a first resource and a second resource, wherein the first resource and/or the second resource is on an edge sub-band, wherein the second manner is sending the reference signal of the first port by using a third resource and a fourth resource, and wherein the third resource and/or the fourth resource is on a non-edge sub-band;
receiving (S702), by using the first resource and the second resource or by using the third resource and the fourth resource, the reference signal corresponding to a first port from the terminal device, wherein the first port belongs to a first port set or a second port set, the first resource is on a first orthogonal frequency division multiplexing OFDM symbol, the second resource is on a second OFDM symbol, the first OFDM symbol is not adjacent to the second OFDM symbol, a reference signal corresponding to a port in the first port set corresponds to a first cover code on the first resource and the second resource, a reference signal corresponding to a port in the second port set corresponds to a second cover code on the first resource and the second resource, and the first cover code is different from the second cover code,
wherein the third resource and the fourth resource are on different frequency domain resources, the reference signal corresponding to the port in the first port set corresponds to a third cover code on the third resource and the fourth resource, the reference signal corresponding to the port in the second port set corresponds to a fourth cover code on the third resource and the fourth resource, the third cover code is different from the fourth cover code, and
wherein the first OFDM symbol is a front-loaded demodulation reference signal DMRS symbol, and the second OFDM symbol is an additional DMRS symbol.

5. The method according to claim 4, wherein the first indication information comprises a first port index, and the first port index indicates the first manner

6. The method according to claim 4, wherein the first indication information comprises a second port index, and the second port index indicates the second manner.

7. A communication apparatus, comprising:
means for performing the method according to any one of claims 1 to 3.

8. A communication apparatus, comprising:
means for performing the method according to any one of claims 4 to 6.

9. A computer-readable storage medium comprising instructions which, when executed by a computer, cause the computer to carry out the method according to any one of claims 1 to 3, or cause the computer to carry out the method according to any one of claims 4 to 6.

## Patentansprüche

1. Kommunikationsverfahren, das durch eine Endgerätevorrichtung durchgeführt wird, umfassend:
Erhalten (S701) eines Referenzsignals, das einem ersten Port entspricht;
Empfangen von ersten Angabeinformationen von einer Netzvorrichtung, wobei, wenn die ersten Angabeinformationen einen ersten Wert aufweisen, sie der Endgerätevorrichtung angeben, das Referenzsignal auf eine erste Weise zu senden, und wenn die ersten Angabeinformationen einen zweiten Wert aufweisen, sie der Endgerätevorrichtung angeben, das Referenzsignal auf eine zweite Weise zu senden, wobei die erste Weise darin besteht, das Referenzsignal des ersten Ports unter Verwendung einer ersten Ressource und einer zweiten Ressource zu senden, wobei sich die erste Ressource und/oder die zweite Ressource auf einem Rand-Subband befindet, wobei die zweite Weise darin besteht, das Referenzsignal des ersten Ports unter Verwendung einer dritten Ressource und einer vierten Ressource zu senden, und wobei sich die dritte Ressource und/oder die vierte Ressource auf einem Nicht-Rand-Subband befindet; und
Senden (S702), an die Netzvorrichtung, des Referenzsignals unter Verwendung der ersten Ressource und der zweiten Ressource oder unter Verwendung der dritten Ressource und der vierten Ressource,
wobei der erste Port zu einem ersten Portsatz oder einem zweiten Portsatz gehört, sich die erste Ressource auf einem ersten Orthogonalfrequenzmultiplex- bzw. OFDM-Symbol befindet, sich die zweite Ressource auf einem zweiten OFDM-Symbol befindet, das erste OFDM-Symbol nicht an das zweite OFDM-Symbol angrenzt, ein Referenzsignal, das einem Port in dem ersten Portsatz entspricht, einem ersten Abdeckcode auf der ersten Ressource und der zweiten Ressource entspricht, ein Referenzsignal, das einem Port in dem zweiten Portsatz entspricht, einem zweiten Abdeckcode auf der ersten Ressource und der zweiten Ressource entspricht und sich der erste Abdeckcode von dem zweiten Abdeckcode unterscheidet,
wobei sich die dritte Ressource und die vierte Ressource auf unterschiedlichen Frequenzbereichsressourcen befinden, das Referenzsignal, das dem Port in dem ersten Portsatz entspricht, einem dritten Abdeckcode auf der dritten Ressource und der vierten Ressource entspricht, das Referenzsignal, das dem Port in dem zweiten Portsatz entspricht, einem vierten Abdeckcode auf der dritten Ressource und der vierten Ressource entspricht, sich der dritte Abdeckcode von dem vierten Abdeckcode unterscheidet und
wobei das erste OFDM-Symbol ein vorn eingefügtes Demodulationsreferenzsignal- bzw. DMRS-Symbol ist und das zweite OFDM-Symbol ein zusätzliches DMRS-Symbol ist.

2. Verfahren nach Anspruch 1, wobei die ersten Angabeinformationen einen ersten Portindex umfassen und der erste Portindex die erste Weise angibt.

3. Verfahren nach Anspruch 1, wobei die ersten Angabeinformationen einen zweiten Portindex umfassen und der zweite Portindex die zweite Weise angibt.

4. Kommunikationsverfahren, das durch eine Netzvorrichtung durchgeführt wird, umfassend:
Senden von ersten Angabeinformationen an eine Endgerätevorrichtung, wobei, wenn die ersten Angabeinformationen einen ersten Wert aufweisen, sie der Endgerätevorrichtung angeben, ein Referenzsignal auf eine erste Weise zu senden, und wenn die ersten Angabeinformationen einen zweiten Wert aufweisen, sie der Endgerätevorrichtung angeben, das Referenzsignal auf eine zweite Weise zu senden, wobei die erste Weise darin besteht, das Referenzsignal des ersten Ports unter Verwendung einer ersten Ressource und einer zweiten Ressource zu senden, wobei sich die erste Ressource und/oder die zweite Ressource auf einem Rand-Subband befindet, wobei die zweite Weise darin besteht, das Referenzsignal des ersten Ports unter Verwendung einer dritten Ressource und einer vierten Ressource zu senden, und wobei sich die dritte Ressource und/oder die vierte Ressource auf einem Nicht-Rand-Subband befindet;
Empfangen (S702), unter Verwendung der ersten Ressource und der zweiten Ressource oder unter Verwendung der dritten Ressource und der vierten Ressource, des Referenzsignals, das einem ersten Port entspricht, von der Endgerätevorrichtung, wobei der erste Port zu einem ersten Portsatz oder einem zweiten Portsatz gehört, sich die erste Ressource auf einem ersten Orthogonalfrequenzmultiplex- bzw. OFDM-Symbol befindet, sich die zweite Ressource auf einem zweiten OFDM-Symbol befindet, das erste OFDM-Symbol nicht an das zweite OFDM-Symbol angrenzt, ein Referenzsignal, das einem Port in dem ersten Portsatz entspricht, einem ersten Abdeckcode auf der ersten Ressource und der zweiten Ressource entspricht, ein Referenzsignal, das einem Port in dem zweiten Portsatz entspricht, einem zweiten Abdeckcode auf der ersten Ressource und der zweiten Ressource entspricht und sich der erste Abdeckcode von dem zweiten Abdeckcode unterscheidet,
wobei sich die dritte Ressource und die vierte Ressource auf unterschiedlichen Frequenzbereichsressourcen befinden, das Referenzsignal, das dem Port in dem ersten Portsatz entspricht, einem dritten Abdeckcode auf der dritten Ressource und der vierten Ressource entspricht, das Referenzsignal, das dem Port in dem zweiten Portsatz entspricht, einem vierten Abdeckcode auf der dritten Ressource und der vierten Ressource entspricht, sich der dritte Abdeckcode von dem vierten Abdeckcode unterscheidet und
wobei das erste OFDM-Symbol ein vorn eingefügtes Demodulationsreferenzsignal- bzw. DMRS-Symbol ist und das zweite OFDM-Symbol ein zusätzliches DMRS-Symbol ist.

5. Verfahren nach Anspruch 4, wobei die ersten Angabeinformationen einen ersten Portindex umfassen und der erste Portindex die erste Weise angibt.

6. Verfahren nach Anspruch 4, wobei die ersten Angabeinformationen einen zweiten Portindex umfassen und der zweite Portindex die zweite Weise angibt.

7. Kommunikationseinrichtung, umfassend:
Mittel zum Durchführen des Verfahrens nach einem der Ansprüche 1 bis 3.

8. Kommunikationseinrichtung, umfassend:
Mittel zum Durchführen des Verfahrens nach einem der Ansprüche 4 bis 6.

9. Computerlesbares Speichermedium, das Anweisungen umfasst, die bei Ausführung durch einen Computer bewirken, dass der Computer das Verfahren nach einem der Ansprüche 1 bis 3 durchführt, oder bewirken, dass der Computer das Verfahren nach einem der Ansprüche 4 bis 6 durchführt.

## Revendications

1. Procédé de communication réalisé par un dispositif terminal, comprenant :
l'obtention (S701) d'un signal de référence correspondant à un premier port ;
la réception d'une première information d'indication, en provenance d'un dispositif réseau, dans lequel lorsque la première information d'indication est une première valeur, elle indique au dispositif terminal d'envoyer le signal de référence d'une première manière et lorsque la première information d'indication est une deuxième valeur, elle indique au dispositif terminal d'envoyer le signal de référence d'une deuxième manière, la première manière étant l'envoi du signal de référence du premier port en utilisant une première ressource et une deuxième ressource, la première ressource et/ou la deuxième ressource se trouvant sur une sous-bande de périphérie, la deuxième manière étant l'envoi du signal de référence du premier port en utilisant une troisième ressource et une quatrième ressource, et la troisième ressource et/ou la quatrième ressource se trouvant sur une sous-bande non de périphérie ; et
l'envoi (S702), vers le dispositif réseau, du signal de référence en utilisant la première ressource et la deuxième ressource ou en utilisant la troisième ressource et la quatrième ressource,
dans lequel le premier port appartient à un premier ensemble de ports ou à un deuxième ensemble de ports, la première ressource se trouve sur un premier symbole de multiplexage par répartition orthogonale de la fréquence OFDM, la deuxième ressource se trouve sur un deuxième symbole OFDM, le premier symbole OFDM n'est pas adjacent au deuxième symbole OFDM, un signal de référence correspondant à un port dans le premier ensemble de ports correspond à un premier code de couverture sur la première ressource et la deuxième ressource, un signal de référence correspondant à un port dans le deuxième ensemble de ports correspond à un deuxième code de couverture sur la première ressource et la deuxième ressource, et le premier code de couverture est différent du deuxième code de couverture,
dans lequel la troisième ressource et la quatrième ressource sont sur des ressources de domaine de fréquence différentes, le signal de référence correspondant au port dans le premier ensemble de ports correspond à un troisième code de couverture sur la troisième ressource et la quatrième ressource, le signal de référence correspondant au port dans le deuxième ensemble de ports correspond à un quatrième code de couverture sur la troisième ressource et la quatrième ressource, le troisième code de couverture est différent du quatrième code de couverture, et
dans lequel le premier symbole OFDM est un symbole de signal de référence de démodulation DMRS prépositionné, et le deuxième symbole OFDM est un symbole DMRS supplémentaire.

2. Procédé selon la revendication 1, dans lequel la première information d'indication comprend un premier indice de port, et le premier indice de port indique la première manière.

3. Procédé selon la revendication 1, dans lequel la première information d'indication comprend un deuxième indice de port, et le deuxième indice de port indique la deuxième manière.

4. Procédé de communication réalisé par un dispositif réseau, comprenant :
l'envoi d'une première information d'indication, vers un dispositif terminal, dans lequel lorsque la première information d'indication est une première valeur, elle indique au dispositif terminal d'envoyer un signal de référence d'une première manière et lorsque la première information d'indication est une deuxième valeur, elle indique au dispositif terminal d'envoyer le signal de référence d'une deuxième manière, la première manière étant l'envoi du signal de référence du premier port en utilisant une première ressource et une deuxième ressource, la première ressource et/ou la deuxième ressource se trouvant sur une sous-bande de périphérie, la deuxième manière étant l'envoi du signal de référence du premier port en utilisant une troisième ressource et une quatrième ressource, et la troisième ressource et/ou la quatrième ressource se trouvant sur une sous-bande non de périphérie ;
la réception (S702), en utilisant la première ressource et la deuxième ressource ou en utilisant la troisième ressource et la quatrième ressource, du signal de référence correspondant à un premier port en provenance du dispositif terminal, dans lequel le premier port appartient à un premier ensemble de ports ou à un deuxième ensemble de ports, la première ressource se trouve sur un premier symbole de multiplexage par répartition orthogonale de la fréquence OFDM, la deuxième ressource se trouve sur un deuxième symbole OFDM, le premier symbole OFDM n'est pas adjacent au deuxième symbole OFDM, un signal de référence correspondant à un port dans le premier ensemble de ports correspond à un premier code de couverture sur la première ressource et la deuxième ressource, un signal de référence correspondant à un port dans le deuxième ensemble de ports correspond à un deuxième code de couverture sur la première ressource et la deuxième ressource, et le premier code de couverture est différent du deuxième code de couverture,
dans lequel la troisième ressource et la quatrième ressource sont sur des ressources de domaine de fréquence différentes, le signal de référence correspondant au port dans le premier ensemble de ports correspond à un troisième code de couverture sur la troisième ressource et la quatrième ressource, le signal de référence correspondant au port dans le deuxième ensemble de ports correspond à un quatrième code de couverture sur la troisième ressource et la quatrième ressource, le troisième code de couverture est différent du quatrième code de couverture, et
dans lequel le premier symbole OFDM est un symbole de signal de référence de démodulation DMRS prépositionné, et le deuxième symbole OFDM est un symbole DMRS supplémentaire.

5. Procédé selon la revendication 4, dans lequel la première information d'indication comprend un premier indice de port, et le premier indice de port indique la première manière.

6. Procédé selon la revendication 4, dans lequel la première information d'indication comprend un deuxième indice de port, et le deuxième indice de port indique la deuxième manière.

7. Appareil de communication, comprenant :
des moyens pour exécuter le procédé selon l'une quelconque des revendications 1 à 3.

8. Appareil de communication, comprenant :
des moyens pour exécuter le procédé selon l'une quelconque des revendications 4 à 6.

9. Support de stockage lisible par ordinateur, comprenant des instructions qui, lorsqu'elles sont exécutées par un ordinateur, amènent l'ordinateur à mettre en œuvre le procédé selon l'une quelconque des revendications 1 à 3 ou amènent l'ordinateur à mettre en œuvre le procédé selon l'une quelconque des revendications 4 à 6.
